(19) **Europäisches Patentamt**
**European Patent Office**
**Office européen des brevets**

(11) **EP 4 198 826 A1**

(12) **EUROPEAN PATENT APPLICATION**
published in accordance with Art. 153(4) EPC

(43) Date of publication:
**21.06.2023 Bulletin 2023/25**

(51) International Patent Classification (IPC):
**G06N 3/04** *(2023.01)*    **G06K 9/62** *(2022.01)*
**G06N 3/063** *(2023.01)*

(21) Application number: **21860545.9**

(22) Date of filing: **30.08.2021**

(86) International application number:
**PCT/CN2021/115216**

(87) International publication number:
**WO 2022/042713 (03.03.2022 Gazette 2022/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.08.2020 CN 202010899680**

(71) Applicant: **Huawei Technologies Co., Ltd.
Shenzhen, Guangdong 518129 (CN)**

(72) Inventors:
• **ZHANG, Junlei**
  **Shenzhen, Guangdong 518129 (CN)**

• **LIU, Chuanjian**
  **Shenzhen, Guangdong 518129 (CN)**
• **LI, Guilin**
  **Shenzhen, Guangdong 518129 (CN)**
• **ZHANG, Xing**
  **Shenzhen, Guangdong 518129 (CN)**
• **ZHANG, Wei**
  **Shenzhen, Guangdong 518129 (CN)**
• **LI, Zhenguo**
  **Shenzhen, Guangdong 518129 (CN)**

(74) Representative: **Maiwald GmbH
Engineering
Elisenhof
Elisenstrasse 3
80335 München (DE)**

(54) **DEEP LEARNING TRAINING METHOD AND APPARATUS FOR USE IN COMPUTING DEVICE**

(57)    A deep learning training method for a computing device and an apparatus are disclosed. The method includes: obtaining a training set, a first neural network, and a second neural network, where shortcut connections included in the first neural network are less than shortcut connections included in the second neural network; performing at least one time of iterative training on the first neural network based on the training set, to obtain a trained first neural network, where any iterative training includes: using a first output of at least one first intermediate layer in the first neural network as an input of at least one network layer in the second neural network, to obtain an output result of the at least one network layer; and updating the first neural network according to a first loss function. The first loss function includes a constraint term obtained based on the output result of the at least one network layer in the second neural network.

FIG. 7

**Description**

This application claims priority to Chinese Patent Application No. 202010899680.0, filed with the China National Intellectual Property Administration on August 31, 2020 and entitled "DEEP LEARNING TRAINING METHOD FOR COMPUTING DEVICE AND APPARATUS", which is incorporated herein by reference in its entirety.

**TECHNICAL FIELD**

This application relates to the field of artificial intelligence, and in particular, to a deep learning training method for a computing device and an apparatus.

**BACKGROUND**

When there are more hidden layers of a neural network, accuracy of the neural network gets saturated and then degrades dramatically. For example, when backpropagation update is performed on the neural network, and backpropagation reaches a bottom layer, because correlation between gradients of the bottom layer is low, the gradients are not fully updated, and output accuracy of the neural network is reduced. A residual neural network is a neural network that is proposed to resolve degradation caused by an increasing depth of a neural network. Usually, when the neural network degrades, training effect of a shallow network in the neural network is better than training effect of a deep network. In the residual neural network, a shortcut (shortcut) connection is added to each block (block), to directly transmit a feature at a bottom layer to a higher layer. Therefore, the residual neural network can avoid or reduce low output accuracy caused by network degradation.

However, in the residual network, because a shortcut connection is added, memory occupied during running is released after a prediction label of a block is obtained. In other words, the shortcut connection delays releasing occupied content, which occupies large memory space.

**SUMMARY**

This application provides a neural network training method and an apparatus, to obtain a neural network with fewer shortcut connections. This improves inference efficiency of the neural network, and reduce memory space occupied when the neural network runs.

In view of this, according to the first aspect, this application provides a deep learning training method for a computing device, including: obtaining a training set, a first neural network, and a second neural network, where the training set includes a plurality of samples, the first neural network includes one or more first intermediate layers, each first intermediate layer includes one or more blocks without a shortcut connection, the second neural network includes a plurality of network layers, the plurality of network layers include an output layer and one or more second intermediate layers, each second intermediate layer includes one or more blocks with a shortcut connection, and a quantity of shortcut connections included in the first neural network is determined based on a memory size of the computing device; and performing at least one time of iterative training on the first neural network based on the training set, to obtain a trained first neural network, where any one of the at least one time of iterative training includes: using a first output of at least one first intermediate layer in the first neural network as an input of at least one network layer in the second neural network, to obtain an output result of the at least one network layer in the second neural network; and updating the first neural network according to a first loss function, to obtain an updated first neural network, where the first loss function includes a constraint term obtained based on the output result of the at least one network layer in the second neural network. For example, the constraint term may be a term for calculation based on the output result of the at least one network layer in the second neural network.

In an implementation of this application, shortcut connections of the first neural network are less than shortcut connections of the second neural network. The second neural network with a shortcut connection may be used to perform knowledge distillation on a first neural network without a shortcut connection or with fewer shortcut connections, so that output accuracy of a trained first neural network may be equal to output accuracy of the second neural network. In addition, on the basis that output accuracy is maintained, shortcut connections of the trained first neural network are less than shortcut connections of the second neural network. Therefore, when the trained first neural network runs, occupied memory space is less than that of the second neural network, duration of completing forward inference by the trained first neural network is shorter, and efficiency of obtaining the output result is higher.

Optionally, the deep learning training method for a computing device provided in this application may be performed by the computing device, or a finally obtained trained first neural network may be deployed on the computing device. The computing device may include one or more hardware acceleration chips such as a central processing unit (central processing unit, CPU), a neural network processing unit (neural network processing unit, NPU), a graphics processing unit (graphics processing unit, GPU), an application-specific integrated circuit (application-specific integrated circuit, ASIC), or a field programmable gate array (field programmable gate array, FPGA). Therefore, in the implementation of this application, distillation is performed on the first neural network by using the second neural network with a shortcut connection, and the first neural network has fewer shortcut connections. Therefore, this can ensure output accuracy of the first neural network, reduce memory space of the computing device occupied when the first neural network runs, reduce forward inference duration of running the trained first neural network on the computing device, and improve running efficiency.

In a possible implementation, the using a first output of at least one first intermediate layer in the first neural network as an input of at least one network layer in the second neural network, to obtain an output result of the at least one network layer in the second neural network includes: using a first output of one first intermediate layer in the first neural network as an input of the output layer in the second neural network, to obtain a first prediction label of the output layer in the second neural network, where the first loss function includes a first constraint term, and the first constraint term includes a loss value corresponding to the first prediction label of the output layer in the second neural network.

Therefore, in the implementation of this application, when the first neural network is trained, an output of the intermediate layer in the first neural network may be used as an input of the output layer in the second neural network, to obtain the first prediction label of the second neural network for the output of the intermediate layer in the first neural network. Then, the first neural network is updated by using the loss of the first prediction label as a constraint. Knowledge distillation performed on the first neural network by using the second neural network is completed.

In a possible implementation, the using a first output of one first intermediate layer in the first neural network as an input of the output layer in the second neural network includes: using a first output of a last intermediate layer in the first neural network as an input of the output layer in the second neural network, to obtain the first prediction label of the output layer in the second neural network.

In the implementation of this application, if a quantity of intermediate layers in the first neural network is the same as a quantity of intermediate layers in the second neural network, the output of the last intermediate layer in the first neural network may be used as the input of the output layer in the second neural network, to obtain the first prediction label output by the output layer in the second neural network.

In a possible implementation, the first constraint term includes a loss value between the first prediction label of the output layer in the second neural network and a true label of a first sample, and the first sample is a sample input to the first neural network. Details are not described in the following. Alternatively, the first constraint term includes a loss value between the first prediction label of the output layer in the second neural network and a second prediction label, and the second prediction label is an output result of the second neural network for a first sample.

In the implementation of this application, the loss value between the first prediction label and the true label of the first sample may be calculated, or a loss value between the first prediction label and the second prediction label output by the second neural network may be calculated. The first neural network is updated based on the loss value, to complete supervised learning of the first neural network.

In a possible implementation, the using a first output of at least one first intermediate layer in the first neural network as an input of at least one network layer in the second neural network, to obtain an output result of the at least one network layer in the second neural network may further include: obtaining the first output of the at least one first intermediate layer in the first neural network; and using the first output of the at least one first intermediate layer in the first neural network as an input of at least one second intermediate layer in the second neural network, to obtain a second output of the at least one second intermediate layer in the second neural network. The updating the first neural network according to a first loss function, to obtain an updated first neural network may include: using the first sample as an input of the second neural network, to obtain a third output of the at least one second intermediate layer in the second neural network; and updating, according to the first loss function, the first neural network obtained through previous iterative training, to obtain the first neural network in current iterative training, where the first loss function further includes a second constraint term, and the second constraint term includes a loss value between the second output of the at least one second intermediate layer in the second neural network and the corresponding third output.

Therefore, in the implementation of this application, the output of the intermediate layer in the first neural network may be used as the input of the intermediate layer in the second neural network, to obtain the second output of the intermediate layer in the second neural network, and further obtain the third output of the second neural network for the input sample. Therefore, the loss value between the second output and the third output is obtained through calculation, the loss value is used as a constraint to update the first neural network, and supervised learning of the first neural network is completed based on the output result of the intermediate layer in the second neural network.

In a possible implementation, any iterative training may further include: obtaining the second prediction label of the second neural network for the first sample; calculating a loss value based on the second prediction label and the true label of the first sample; and updating a parameter of the second neural network based on the loss value, to obtain the second neural network in current iterative training.

Therefore, in the implementation of this application, when the first neural network is trained, the second neural network may also be trained, to improve efficiency of obtaining a trained second neural network.

In a possible implementation, before the performing at least one time of iterative training on the first neural network based on the training set, to obtain a trained first neural network, the method may further include: updating a parameter of the second neural network based on the training set, to obtain an updated second neural network.

Therefore, in the implementation of this application, after the first neural network is trained, the trained second neural network can be obtained. When the first neural network is trained, a structure of the second neural network is fixed. The second neural network is used as a teacher model, and the first neural network is used as a student model, to complete training of the first neural network.

In a possible implementation, the first neural network is used for at least one of image recognition, a classification task, or target detection. Therefore, the implementation of this application may be applied to a plurality of application scenarios such as image recognition, a classification task, or target detection. The method provided in this application has a strong generalization capability.

According to a second aspect, this application provides a training apparatus, including:

an obtaining unit, configured to obtain a training set, a first neural network, and a second neural network, where the training set includes a plurality of samples, the first neural network includes one or more first intermediate layers, each first intermediate layer includes one or more blocks without a shortcut connection, the second neural network includes a plurality of network layers, the plurality of network layers include an output layer and one or more second intermediate layers, each second intermediate layer includes one or more blocks with a shortcut connection, and a quantity of shortcut connections included in the first neural network is determined based on a memory size of a computing device running the first neural network; and

a training unit, configured to perform at least one time of iterative training on the first neural network based on the training set, to obtain a trained first neural network, where any one of the at least one time of iterative training includes: using a first output of at least one first intermediate layer in the first neural network as an input of at least one network layer in the second neural network, to obtain an output result of the at least one network layer in the second neural network; and updating the first neural network according to a first loss function, to obtain an updated first neural network, where the first loss function includes a constraint term obtained based on the output result of the at least one network layer in the second neural network.

In a possible implementation, the training unit is specifically configured to use a first output of one first intermediate layer in the first neural network as an input of a fully connected layer in the second neural network, to obtain a first prediction label of the fully connected layer in the second neural network. The first loss function includes a first constraint term, and the first constraint term includes a loss value corresponding to the first prediction label of the fully connected layer in the second neural network.

In a possible implementation, the training unit is specifically configured to use a first output of a last intermediate layer in the first neural network as an input of the output layer in the second neural network, to obtain the first prediction label of the output layer in the second neural network.

In a possible implementation, the first constraint term includes a loss value between the first prediction label of the output layer in the second neural network and a true label of a sample output to the first neural network; or the first constraint term includes a loss value between the first prediction label of the output layer in the second neural network and a second prediction label, and the second prediction label is an output result of the second neural network for a sample output to the first neural network.

In a possible implementation, the training unit is further configured to: obtain the first output of the at least one first intermediate layer in the first neural network; use the first output of the at least one first intermediate layer in the first neural network as an input of at least one second intermediate layer in the second neural network, to obtain a second output of the at least one second intermediate layer in the second neural network; use the sample output to the first neural network as an input of the second neural network, to obtain a third output of the at least one second intermediate layer in the second neural network; and update, according to the first loss function, the first neural network obtained through previous iterative training, to obtain the first neural network in current iterative training, where the first loss function further includes a second constraint term, and the second constraint term includes a loss value between the second output of the at least one second intermediate layer in the second neural network and the corresponding third output.

In a possible implementation, the training unit is further configured to: obtain the second prediction label of the second neural network for the sample output to the first neural network; calculate a loss value based on the second prediction label and the true label of the sample output to the first neural network; and update a parameter of the second neural network based on the loss value, to obtain the second neural network in current iterative training.

In a possible implementation, the training unit is further configured to: before performing at least one time of iterative training on the first neural network based on the training set, to obtain the trained first neural network, update the parameter of the second neural network based on the training set, to obtain an updated second neural network.

In a possible implementation, the first neural network is used for at least one of image recognition, a classification task, or target detection.

According to a third aspect, this application provides a neural network. The neural network includes one or more first intermediate layers, each first intermediate layer includes one or more blocks without a shortcut connection, and the neural network is obtained through training in any one of the first aspect or the implementations of the first aspect.

According to a fourth aspect, an embodiment of this application provides a training apparatus, including a processor and a memory. The processor and the memory are interconnected through a line, and the processor invokes program code in the memory to perform a processing-related function in the deep learning training method for a computing device in any implementation of the first aspect. Optionally, the training apparatus may be a chip.

According to a fifth aspect, an embodiment of this application provides a training apparatus. The training apparatus may also be referred to as a digital processing chip or a chip. The chip includes a processing unit and a communication interface. The processing unit obtains program instructions through the communication interface, and when the program instructions are executed by the processing unit, the processing unit is configured to perform a processing-related function in any one of the first aspect or the optional implementations of the first aspect.

According to a sixth aspect, an embodiment of this application provides a computer-readable storage medium including instructions. When the instructions are run on a computer, the computer is enabled to perform the method in any one of the first aspect or the optional implementations of the first aspect.

According to a seventh aspect, an embodiment of this application provides a computer program product including instructions. When the computer program product is run on a computer, the computer is enabled to perform the method in any one of the first aspect or the optional implementations of the first aspect.

## DESCRIPTION OF DRAWINGS

FIG. 1 is a schematic diagram of an artificial intelligence main framework applied to this application;
FIG. 2 is a schematic diagram of a structure of a convolutional neural network according to an embodiment of this application;
FIG. 3 is a schematic diagram of a structure of a residual neural network according to an embodiment of this application;
FIG. 4 is a schematic diagram of a structure of a block with a shortcut connection according to an embodiment of this application;
FIG. 5 is a schematic diagram of a system architecture according to an embodiment of this application;
FIG. 6 is a schematic diagram of another system architecture according to an embodiment of this application;
FIG. 7 is a schematic flowchart of a deep learning training method for a computing device according to an embodiment of this application;
FIG. 8 is a schematic flowchart of another deep learning training method for a computing device according to an embodiment of this application;
FIG. 9 is a schematic flowchart of another deep learning training method for a computing device according to an embodiment of this application;
FIG. 10 is a schematic diagram of a structure of a training apparatus according to an embodiment of this application;
FIG. 11 is a schematic diagram of a structure of another training apparatus according to an embodiment of this application; and
FIG. 12 is a schematic diagram of a structure of a chip according to an embodiment of this application.

## DESCRIPTION OF EMBODIMENTS

The following describes technical solutions in embodiments of this application with reference to the accompanying drawings in embodiments of this application. It is clear that the described embodiments are merely a part rather than all of embodiments of this application. All other embodiments obtained by a person of ordinary skill in the art based on the embodiments of this application without creative efforts shall fall within the protection scope of this application.

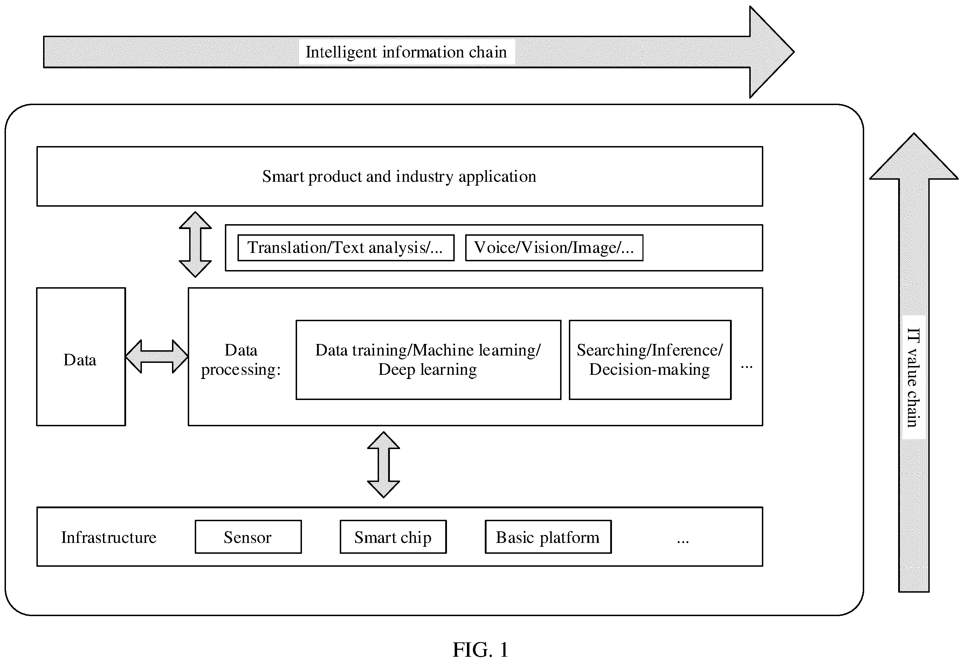

An overall working procedure of an artificial intelligence system is first described. Refer to FIG. 1. FIG. 1 shows a schematic diagram of a structure of an artificial intelligence main framework. The following describes the artificial intelligence main framework from two dimensions: an "intelligent information chain" (horizontal axis) and an "IT value chain" (vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In these processes, the data undergoes a refinement process of "data-information-knowledge-intelligence". The "IT value chain" reflects a value brought by artificial intelligence to the information technology industry from an underlying infrastructure and information (technology providing and processing implementation) of human intelligence to an industrial ecological process of a system.

(1) Infrastructure

The infrastructure provides computing capability support for the artificial intelligence system, implements communication with the external world, and implements support by using a basic platform. The infrastructure communicates with the outside by using a sensor. A computing capability is provided by an intelligent chip, for example, a hardware acceleration chip such as a central processing unit (central processing unit, CPU), a neural network processing unit (neural-network processing unit, NPU), a graphics processing unit (graphics processing unit, GPU), an application-specific integrated circuit (application-specific integrated circuit, ASIC), or a field programmable gate array (field programmable gate array, FPGA). The basic platform of the infrastructure includes related platforms, for example, a distributed computing framework and a network, for assurance and support, including cloud storage and computing, an interconnection network, and the like. For example, the sensor communicates with the outside to obtain data, and the data is provided to a smart chip in a distributed computing system provided by the basic platform for computing.

(2) Data

Data at an upper layer of the infrastructure is used to indicate a data source in the field of artificial intelligence. The data relates to a graph, an image, speech, and text, further relates to Internet of things data of a conventional device, and includes service data of an existing system and perception data such as force, displacement, a liquid level, a temperature, and humidity.

(3) Data processing

Data processing usually includes a manner such as data training, machine learning, deep learning, searching, inference, or decision-making.
Machine learning and deep learning may mean performing symbolic and formalized intelligent information modeling, extraction, preprocessing, training, and the like on data.
Inference is a process in which a human intelligent inferring manner is simulated in a computer or an intelligent system, and machine thinking and problem resolving are performed by using formal information according to an inferring control policy. A typical function is searching and matching.
Decision-making is a process in which a decision is made after intelligent information is inferred, and usually provides functions such as classification, ranking, and prediction.

(4) General capability

After data processing mentioned above is performed on data, some general capabilities may further be formed based on a data processing result, for example, an algorithm or a general system, such as translation, text analysis, computer vision processing, speech recognition, and image recognition.

(5) Smart product and industry application

The smart product and the industry application are a product and an application of the artificial intelligence system in various fields, and are package of an overall solution of the artificial intelligence, so that decision-making for intelligent information is productized and an application is implemented. Application fields mainly include a smart terminal, smart transportation, smart health care, autonomous driving, a safe city, and the like.
Because embodiments of this application relate to massive application of a neural network, for ease of understanding the solutions in embodiments of this application, the following describes terms and concepts related to the neural network that may be used in the embodiments of this application.

(1) Neural network

The neural network may include a neuron. The neuron may be an operation unit that uses $x_s$ and an intercept of $b$ as an input. An output of the operation unit may be shown as a formula (1-1):

$$h_{W,b}\left(x\right) = f\left(W^T x + b\right) = f\left(\sum_{s=1}^{n} W_s x_s + b\right)$$

s = 1, 2, ..., or n, n is a natural number greater than 1, $W$ is a weight of $x_s$, and $b$ is a bias of the neuron. $f$ is an activation function (activation function) of the neuron, used to introduce a nonlinear feature into the neural network, to convert an input signal in the neuron into an output signal. The output signal of the activation function may be used as an input of a next convolutional layer, and the activation function may be a sigmoid function. The neural network is a network constituted by connecting a plurality of single neurons together. To be specific, an output of a neuron may be an input to another neuron. An input of each neuron may be connected to a local receptive field of a previous layer to extract a feature of the local receptive field. The local receptive field may be a region including several neurons.

(2) Deep neural network

The deep neural network (deep neural network, DNN) is also referred to as a multi-layer neural network, and may be understood as a neural network with a plurality of intermediate layers. The DNN is divided based on locations of different layers, and a neural network in the DNN may be divided into three types: an input layer, an intermediate layer, and an output layer. Usually, a first layer is the input layer, a last layer is the output layer, and a middle layer is the intermediate layer, which is also referred to as a hidden layer. Layers are fully connected. To be specific, any neuron at an $i^{th}$ layer is necessarily connected to any neuron at an $(i+1)^{th}$ layer.

Although the DNN seems complex, each layer of the DNN may be represented as the following linear relationship expression: $\vec{y} = \alpha(w\vec{x} + \vec{b})$, where $\vec{x}$ is an input vector, $\vec{y}$ is an output vector, $\vec{b}$ is a bias vector, which is also referred to as a bias parameter, w is a weight matrix (which is also referred to as a coefficient), and $\alpha()$ is an activation function. At each layer, the output vector $\vec{y}$ is obtained by performing such a simple operation on the input vector $\vec{x}$. Because there are a plurality of layers in the DNN, there are also a plurality of coefficients $W$ and a plurality of bias vectors $\vec{b}$. Definitions of the parameters in the DNN are as follows: The coefficient w is used as an example. It is assumed that in a DNN with three layers, a linear coefficient from the fourth neuron at the second layer to the second neuron at the third layer is defined as $W_{24}^3$. The superscript 3 indicates a layer at which the coefficient $W$ is located, and the subscript corresponds to an output third-layer index 2 and an input second-layer index 4.

In conclusion, a coefficient from a $k^{th}$ neuron at an $(L - 1)^{th}$ layer to a $j^{th}$ neuron at an $L^{th}$ layer is defined as $W_{jk}^L$.

It should be noted that there is no parameter $W$ at the input layer. In the deep neural network, more intermediate layers make the network more capable of describing a complex case in the real world. Theoretically, a model with more parameters indicates higher complexity and a larger "capacity", and indicates that the model can be used to complete a more complex learning task. A process of training the deep neural network is a process of learning a weight matrix, and a final objective of training is to obtain weight matrices (weight matrices formed by vectors $W$ at many layers) of all layers of a trained deep neural network.

(3) Convolutional neural network

The convolutional neural network (convolutional neuron network, CNN) is a deep neural network with a convolutional architecture. The convolutional neural network includes a feature extractor including a convolution layer and a sub-sampling layer, and the feature extractor may be considered as a filter. The convolutional layer is a neuron layer that is in the convolutional neural network and at which convolution processing is performed on an input signal. At the convolutional layer of the convolutional neural network, one neuron may be connected only to some adjacent-layer neurons. One convolutional layer usually includes several feature planes, and each feature plane may include some neurons arranged in a rectangular form. Neurons on a same feature plane share a weight, where the shared weight is a convolution kernel. Weight sharing may be understood as that an image information extraction manner is irrelevant to a location. The convolution kernel may be initialized in a form of a random-size matrix. In a process of training the convolutional neural network, the convolution kernel may obtain an appropriate weight through learning. In addition, a direct benefit brought by weight sharing is that connections between layers of the convolutional neural network are reduced and an overfitting risk is lowered.

(4) Recurrent neural network (recurrent neural network, RNN) The recurrent neural network is also referred to as a recursive neural network, and is used to process sequence data. In a conventional neural network model, from an input layer to an intermediate layer and then to an output layer, the layers are fully connected, and nodes at each layer are not connected. Such a common neural network resolves many problems, but is still incapable of resolving many other problems. For example, if a word in a sentence is to be predicted, a previous word usually needs to be used, because adjacent words in the sentence are related. A reason why the RNN is referred to as the recurrent neural network is that a current output of a sequence is also related to a previous output of the sequence. A specific representation form is that the network memorizes previous information and applies the previous information to calculation of the current output. To be specific, nodes at the intermediate layer are connected, and an input of the intermediate layer not only includes an output of the input layer, but also includes an output of the intermediate layer at a previous moment. Theoretically, the RNN can process sequence data of any length. Training for the RNN is the same as training for a conventional CNN or DNN.

(5) Residual neural network (ResNet)

The residual neural network is proposed to resolve degradation (degradation) generated when there are too many hidden layers in a neural network. Degradation means that when there are more hidden layers in the network, accuracy of the network gets saturated and then degrades dramatically. In addition, degradation is not caused by overfitting. However, when backpropagation is performed, and backpropagation reaches a bottom layer, correlation between gradients is low, the gradients are not fully updated, and consequently, accuracy of a prediction label of a finally obtained model is reduced. When the neural network degrades, training effect of a shallow network is better than training effect of a deep network. In this case, if a feature at a lower layer is transmitted to a higher layer, effect is at least not worse than the effect of the shallow network. Therefore, the effect may be reached through identity mapping (identity mapping). Identity mapping is referred to as a shortcut (shortcut) connection, and it is easier to optimize shortcut mapping than to optimize original mapping.
In the following embodiments of this application, the mentioned second neural network or teacher model is a residual neural network, and can output a result with high accuracy.

(6) Loss function

In a process of training a deep neural network, because it is expected that an output of the deep neural network is as close as possible to a value that is actually expected to be predicted, a current predicted value of the network may be compared with a target value that is actually expected, and then a weight vector at each layer of the neural network is updated based on a difference between the current predicted value and the target value (there is usually an initialization process before the first update, that is, a parameter is preconfigured for each layer of the deep neural network). For example, if the predicted value of the network is large, the weight vector is adjusted to lower the predicted value until the deep neural network can predict the target value that is actually expected or a value close to the target value that is actually expected. Therefore, "how to obtain, through comparison, the difference between the predicted value and the target value" needs to be predefined. This is a loss function (loss function) or an objective function (objective function). The loss function and the objective function are important equations used to measure the difference between the predicted value and the target value. The loss function is used as an example. A higher output value (loss) of the loss function indicates a larger difference. Therefore, training of the deep neural network is a process of minimizing the loss as much as possible.

(7) Back propagation algorithm

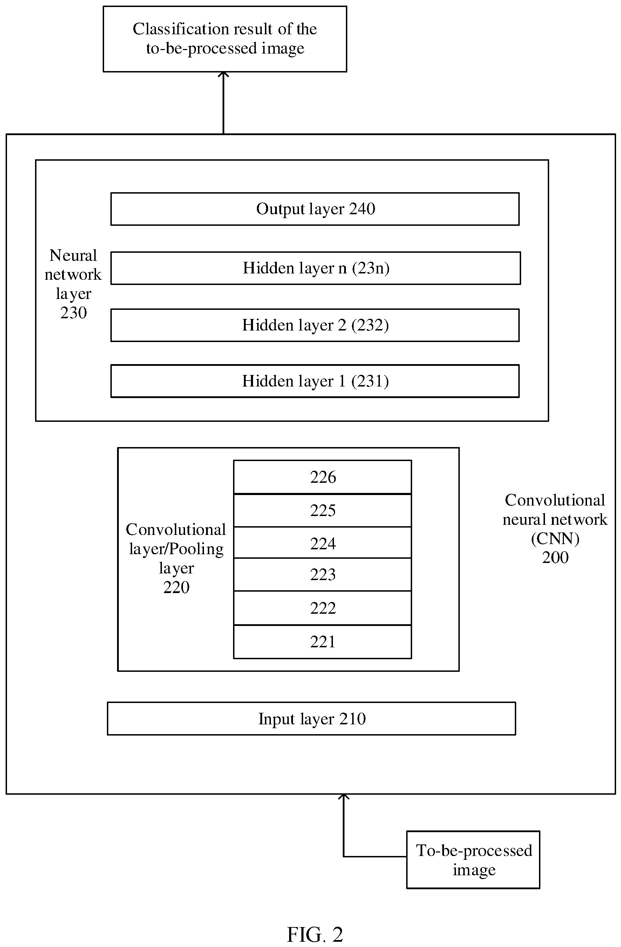

A neural network may use an error back propagation (back propagation, BP) algorithm to correct a value of a parameter in an initial neural network model in a training process, so that a reconstruction error loss of the neural network model becomes smaller. Specifically, an input signal is transferred forward until an error loss occurs at an output, and the parameter in the initial neural network model is updated based on back propagation error loss information, to make the error loss converge. The back propagation algorithm is an error-loss-centered back propagation motion intended to obtain a parameter, such as a weight matrix, of an optimal neural network model.
Usually, a CNN is a common neural network. For ease of understanding, the following describes structures of a convolutional neural network and a residual neural network by using an example.
For example, the following describes a structure of the CNN in detail with reference to FIG. 2. As described in the foregoing basic concepts, a convolutional neural network is a deep neural network with a convolutional structure, and is a deep learning (deep learning) architecture. In the deep learning architecture, multi-layer learning is performed at different abstract levels by using a machine learning algorithm. As a deep learning architecture, the CNN is a feed-forward (feed-forward) artificial neural network. Neurons in the feed-forward artificial neural network may respond to an input image.
As shown in FIG. 2, a convolutional neural network (CNN) 200 may include an input layer 210, a convolutional layer/pooling layer 220, and a neural network layer 230. The pooling layer is optional. In the following implementations of this application, for ease of understanding, each layer is referred to as a stage. The following describes the layers in detail.

Convolutional layer/Pooling layer 220:

Convolutional layer:

As shown in FIG. 2, for example, the convolutional layer/pooling layer 220 may include layers 221 to 226. In an implementation, the layer 221 is a convolutional layer, the layer 222 is a pooling layer, the layer 223 is a convolutional layer, the layer 224 is a pooling layer, the layer 225 is a convolutional layer, and the layer 226 is a pooling layer. In another implementation, the layer 221 and the layer 222 are convolutional layers, the layer 223 is a pooling layer, the layer 224 and the layer 225 are convolutional layers, and the layer 226 is a pooling layer. In other words, an output of a convolutional layer may be used as an input for a subsequent pooling layer, or may be used as an input for another convolutional layer, to continue to perform a convolution operation.

The following uses the convolutional layer 221 as an example to describe an internal working principle of one convolutional layer.

The convolutional layer 221 may include a plurality of convolution operators. The convolution operator is also referred to as a kernel. In image processing, the convolution operator functions as a filter that extracts specific information from an input image matrix. The convolution operator may essentially be a weight matrix, and the weight matrix is usually predefined. In a process of performing a convolution operation on an image, the weight matrix usually processes pixels at a granularity level of one pixel (or two pixels, depending on a value of a stride (stride)) in a horizontal direction on an input image, to extract a specific feature from the image. A size of the weight matrix should be related to a size of the image. It should be noted that a depth dimension (depth dimension) of the weight matrix is the same as a depth dimension of the input image. During a convolution operation, the weight matrix extends to an entire depth of the input image. Therefore, a convolutional output of a single depth dimension is generated through convolution with a single weight matrix. However, in most cases, a single weight matrix is not used, but a plurality of weight matrices with a same size (rows x columns), namely, a plurality of same-type matrices, are applied. Outputs of the weight matrices are stacked to form a depth dimension of a convolutional image. The dimension herein may be understood as being determined based on the foregoing "plurality". Different weight matrices may be used to extract different features from the image. For example, one weight matrix is used to extract edge information of the image, another weight matrix is used to extract a specific color of the image, and a further weight matrix is used to blur unnecessary noise in the image. The plurality of weight matrices have the same size (rows x columns), and feature maps extracted from the plurality of weight matrices with the same size have a same size. Then, the plurality of extracted feature maps with the same size are combined to form an output of the convolution operation.

Weight values in these weight matrices need to be obtained through a lot of training during actual application. Each weight matrix formed by using the weight values obtained through training may be used to extract information from an input image, to enable the convolutional neural network 200 to perform correct prediction.

When the convolutional neural network 200 has a plurality of convolutional layers, a relatively large quantity of general features are usually extracted at an initial convolutional layer (for example, 221). The general feature may also be referred to as a low-level feature. As the depth of the convolutional neural network 200 increases, a feature extracted at a subsequent convolutional layer (for example, 226) becomes more complex, for example, a high-level semantic feature. A feature with higher semantics is more applicable to a to-be-resolved problem.

Pooling layer/Pooling layer 220:

Because a quantity of training parameters usually needs to be reduced, a pooling layer usually needs to be periodically introduced after a convolutional layer, and the pooling layer may also be referred to as a downsampling layer. For the layers 221 to 226 in the layer 220 shown in FIG. 2, one convolutional layer may be followed by one pooling layer, or a plurality of convolutional layers may be followed by one or more pooling layers. During image processing, the pooling layer is only used to reduce a space size of an image. The pooling layer may include an average pooling operator and/or a maximum pooling operator, to perform sampling on the input image to obtain an image with a small size. The average pooling operator may be used to calculate pixel values in the image in a specific range, to generate an average value. The average value is used as an average pooling result. The maximum pooling operator may be used to select a pixel with a maximum value in a specific range as a maximum pooling result. In addition, similar to that the size of the weight matrix at the convolutional layer needs to be related to the size of the image, an operator at the pooling layer also needs to be related to the size of the image. A size of a processed image output from the pooling layer may be less than a size of an image input to the pooling layer. Each pixel in the image output from the pooling layer represents an average value or a maximum value of a corresponding sub-region of the image input to the pooling layer.

Neural network layer 230:

After processing performed at the convolutional layer/pooling layer 220, the convolutional neural network 200 is not ready to output required output information. As described above, at the convolutional layer/pooling layer 220, only a feature is extracted, and parameters resulting from an input image are reduced. However, to generate final output information (required class information or other related information), the convolutional neural network 200 needs to use the neural network layer 230 to generate an output of one required class or outputs of a group of required classes. Therefore, the neural network layer 230 may include a plurality of intermediate layers (231, 232, ..., and 232 to 23n shown in FIG. 2) and an output layer 240. The output layer may also be referred to as a fully connected (fully connected, FC) layer. Parameters included in the plurality of intermediate layers may be obtained through pretraining based on related training data of a specific task type. For example, the task type may include image recognition, image classification, super-resolution image reconstruction, and the like.

At the neural network layer 230, the plurality of intermediate layers are followed by the output layer 240, namely, a last layer of the entire convolutional neural network 200. The output layer 240 has a loss function similar to a categorical cross entropy, and the loss function is specifically configured to calculate a prediction error. Once forward propagation (for example, propagation in a direction from 210 to 240 in FIG. 2) of the entire convolutional neural network 200 is completed, back propagation (for example, propagation in a direction from 240 to 210 in FIG. 2) is started to update a weight value and a deviation of each layer mentioned above, to reduce a loss of the convolutional neural network 200 and an error between a result output by the convolutional neural network 200 by using the output layer and an ideal result.

It should be noted that the convolutional neural network 200 shown in FIG. 2 is merely used as an example of a convolutional neural network. During specific application, the convolutional neural network may alternatively exist in a form of another network model.

In this application, a to-be-processed image may be processed based on the convolutional neural network 200 shown in FIG. 2, to obtain a classification result of the to-be-processed image. As shown in FIG. 2, the classification result of the to-be-processed image is output after the to-be-processed image is processed by the input layer 210, the convolutional layer/pooling layer 220, and the neural network layer 230.

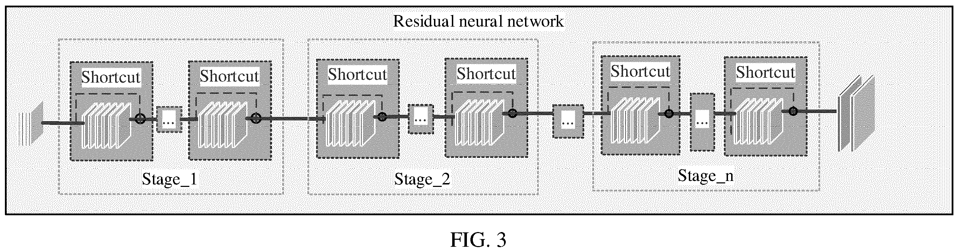

For example, the following describes a structure of a residual neural network provided in this application. FIG. 3 is a schematic diagram of a structure of a residual neural network according to this application.

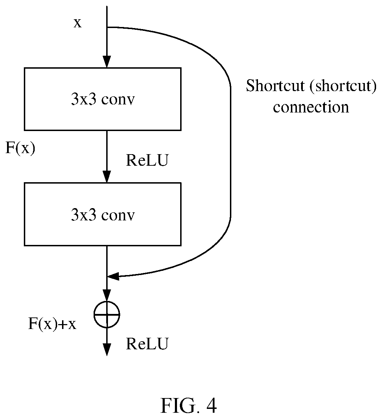

The residual neural network shown in FIG. 3 includes a plurality of subnetworks, and the plurality of subnetworks are also referred to as a multi-layer network. In other words, each stage in stage_1 to stage n shown in FIG. 3 indicates one network layer, and includes one or more blocks (block). A structure of the block is similar to a structure of each network layer in the convolutional neural network shown in FIG. 2. A difference lies in that there is a shortcut (shortcut) connection between an input and an output of each block, and the shortcut connection is used to directly map an input of the block to an output, to implement identity mapping between an input of the network layer and a residual output. One block is used as an example. A structure of one block in the residual neural network may be shown in FIG. 4. The block includes two 3x3 convolution kernels. The convolution kernels are connected by using an activation function, for example, a rectified linear unit (Rectified Linear Unit, ReLU). In addition, an input of the block is directly connected to an output, or an input of the block is connected to an output by using 1x1 convolution, and then the output of the block is obtained by using the ReLU.

The deep learning training method for a computing device provided in embodiments of this application may be performed on a server or a terminal device. The terminal device may be a mobile phone with an image processing function, a tablet personal computer (tablet personal computer, TPC), a media player, a smart television, a laptop computer (laptop computer, LC), a personal digital assistant (personal digital assistant, PDA), a personal computer (personal computer, PC), a camera, a video camera, a smartwatch, a wearable device (wearable device, WD), an autonomous driving vehicle, or the like. This is not limited in this embodiment of this application.

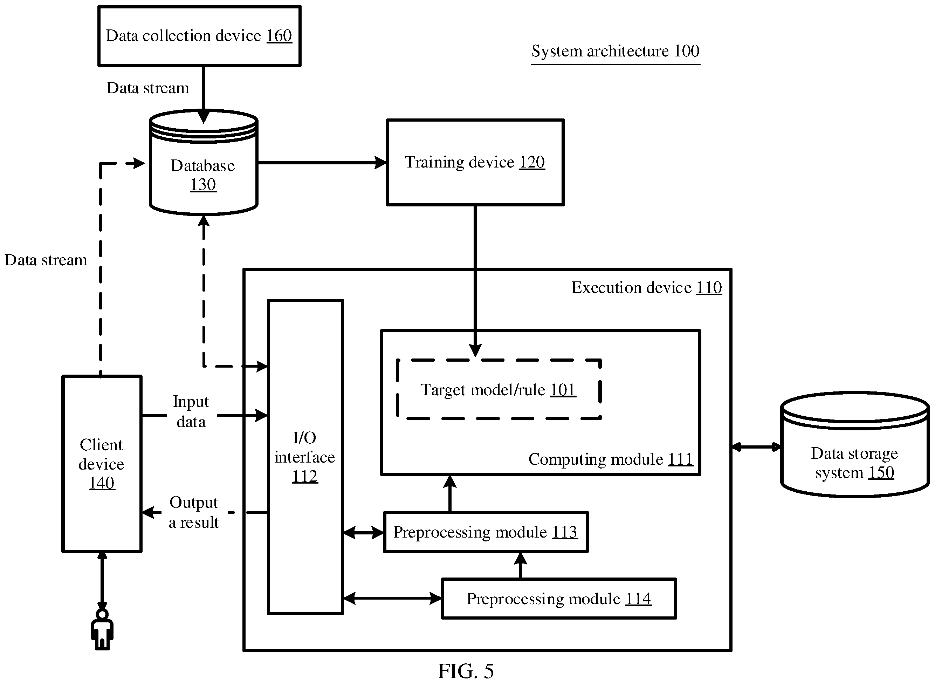

FIG. 5 shows a system architecture 100 according to an embodiment of this application. In FIG. 5, a data collection device 160 is configured to collect training data. In some optional implementations, for an image classification method, the training data may include a training image and a classification result corresponding to the training image, and the classification result corresponding to the training image may be a result of manual pre-labeling. Particularly, in this application, to perform knowledge distillation on a first neural network, the training data may further include a second neural network that is used as a teacher model. The second neural network may be a trained model, or a model that is trained with the first neural network at the same time.

After collecting the training data, the data collection device 160 stores the training data in a database 130, and a training device 120 obtains a target model/rule 101 through training based on the training data maintained in the database 130. Optionally, the training set mentioned in the following implementations of this application may be obtained from the database 130, or may be obtained based on data entered by a user.

The target model/rule 101 may be a trained first neural network in this embodiment of this application.

The following describes the target model/rule 101 obtained by the training device 120 based on the training data. The training device 120 processes an input original image, and compares an output image with the original image until a difference between the image output by the training device 120 and the original image is less than a specific threshold. In this way, training of the target model/rule 101 is completed.

The target model/rule 101 may be configured to implement the first neural network that is trained according to the deep learning training method for a computing device provided in embodiments of this application. In other words, to-be-detected data (for example, an image) which is preprocessed is input to the target module/rule 101, to obtain a processing result. The target model/rule 101 in this embodiment of this application may specifically be the first neural network mentioned below in this application. The first neural network may be a neural network such as a CNN, a DNN, or an RNN. It should be noted that, during actual application, the training data maintained in the database 130 is not necessarily all collected by the data collection device 160, and may be received from another device. It should further be noted that the training device 120 may not necessarily train the target model/rule 101 completely based on the training data maintained in the database 130, or may obtain training data from a cloud or another place to perform model training. The foregoing descriptions should not be construed as a limitation on embodiments of this application.

The target model/rule 101 obtained through training by the training device 120 may be applied to different systems or devices, for example, an execution device 110 shown in FIG. 5. The execution device 110 may also be referred to as a computing device, and may be a terminal, for example, a mobile phone terminal, a tablet computer, a laptop computer, augmented reality (augmented reality, AR)/virtual reality (virtual reality, VR), a vehiclemounted terminal, a server, a cloud device, or the like. In FIG. 5, the execution device 110 configures an input/output (input/output, I/O) interface 112, configured to exchange data with an external device. A user may input data to the I/O interface 112 by using the client device 140, where the input data in this embodiment of this application may include to-be-processed data input by the client device.

A preprocessing module 113 and a preprocessing module 114 are configured to perform preprocessing based on the input data (for example, the to-be-processed data) received through the I/O interface 112. In this embodiment of this application, the preprocessing module 113 and the preprocessing module 114 may not exist (or only one of the preprocessing module 113 and the preprocessing module 114 exists). A computing module 111 is directly configured to process the input data.

In a process in which the execution device 110 preprocesses the input data, or in a process in which the computing module 111 of the execution device 110 performs computing, the execution device 110 may invoke data, code, and the like in the data storage system 150 for corresponding processing, and may further store, in the data storage system 150, data, an instruction, and the like that are obtained through the corresponding processing.

Finally, the I/O interface 112 returns the processing result to the client device 140, to provide the processing result to the user. For example, if the first neural network is used to perform image classification, the processing result is a classification result. Then, the I/O interface 112 returns the obtained classification result to the client device 140, to provide the classification result to the user.

It should be noted that the training device 120 may generate corresponding target models/rules 101 for different targets or different tasks based on different training data. The corresponding target models/rules 101 may be used to implement the foregoing targets or complete the foregoing tasks, to provide a required result for the user. In some scenarios, the execution device 110 and the training device 120 may be a same device, or may be located inside a same computing device. For ease of understanding, the execution device and the training device are separately described in this application, and this is not limited.

In a case shown in FIG. 5, the user may manually input data and the user may input the data on an interface provided by the I/O interface 112. In another case, the client device 140 may automatically send input data to the I/O interface 112. If it is required that the client device 140 needs to obtain authorization from the user to automatically send the input data, the user may set corresponding permission on the client device 140. The user may view, on the client device 140, a result output by the execution device 110. Specifically, the result may be presented in a form of displaying, a sound, an action, or the like. The client device 140 may alternatively be used as a data collection end, to collect, as new sample data, input data that is input to the I/O interface 112 and a prediction label that is output from the I/O interface 112 that are shown in the figure, and store the new sample data in the database 130. It is clear that the client device 140 may alternatively not perform collection. Instead, the I/O interface 112 directly stores, in the database 130 as new sample data, the input data input to the I/O interface 112 and the prediction label output from the I/O interface 112.

It should be noted that FIG. 5 is merely a schematic diagram of the system architecture according to an embodiment of this application. A location relationship between a device, a component, a module, and the like shown in the figure constitutes no limitation. For example, in FIG. 5, the data storage system 150 is an external memory relative to the execution device 110. In another case, the data storage system 150 may alternatively be disposed in the execution device 110.

As shown in FIG. 1, the target model/rule 101 is obtained through training by the training device 120. The target model/rule 101 may be the first neural network in this embodiment of this application. Specifically, the first neural network provided in this embodiment of this application may be a CNN, a deep convolutional neural network (deep convolutional neural network, DCNN), a recurrent neural network (recurrent neural network, RNN), or the like.

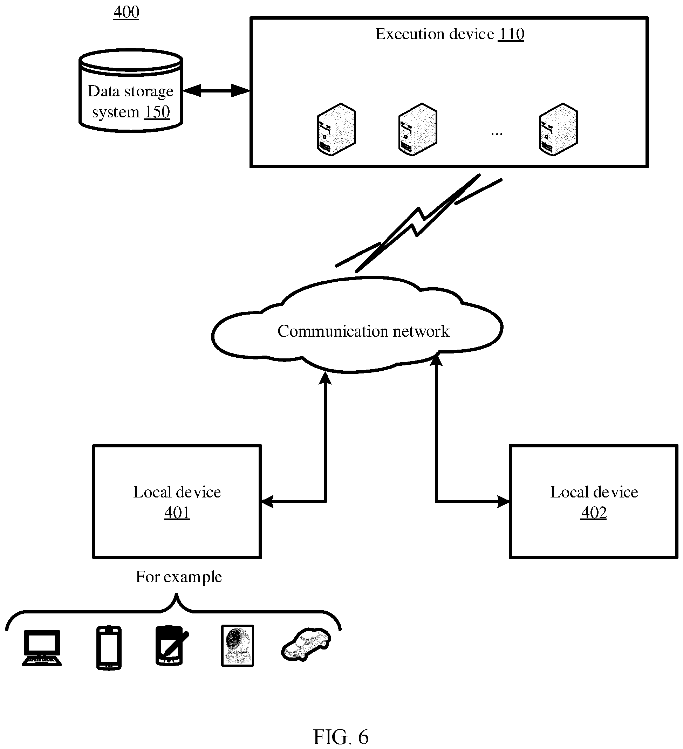

Refer to FIG. 6. An embodiment of this application further provides a system architecture 400. The execution device 110 is implemented by one or more servers. Optionally, the execution device 110 cooperates with another computing device, for example, a device such as a data memory, a router, or a load balancer. The execution device 110 may be disposed on one physical site, or distributed on a plurality of physical sites. The execution device 110 may implement a deep learning training method for a computing device corresponding to FIG. 6 in this application by using data in the data storage system 150 or by invoking program code in the data storage system 150.

A user may operate user equipment (for example, a local device 401 and a local device 402) to interact with the execution device 110. Each local device may be any computing device, such as a personal computer, a computer workstation, a smartphone, a tablet computer, an intelligent camera, a smart automobile, another type of cellular phone, a media consumption device, a wearable device, a set-top box, or a game console.

The local device of each user may interact with the execution device 110 through a communication network of any communication mechanism/communication standard. The communication network may be a wide area network, a local area network, a point-to-point connection, or any combination thereof. Specifically, the communication network may include a wireless network, a wired network, a combination of a wireless network and a wired network, or the like. The wireless network includes but is not limited to any one or any combination of a 5th generation (5th Generation, 5G) mobile communication technology system, a long term evolution (long term evolution, LTE) system, a global system for mobile communication (global system for mobile communication, GSM), a code division multiple access (code division multiple access, CDMA) network, a wideband code division multiple access (wideband code division multiple access, WCDMA) network, wireless fidelity (wireless fidelity, Wi-Fi), Bluetooth (Bluetooth), ZigBee (ZigBee), a radio frequency identification (Radio Frequency Identification, RFID) technology, long range (Long Range, Lora) wireless communication, and near field communication (near field communication, NFC). The wired network may include an optical fiber communication network, a network formed by a coaxial cable, or the like.

In another implementation, one or more aspects of the execution device 110 may be implemented by each local device. For example, the local device 401 may provide local data or feed back a calculation result for the execution device 110. The local device may also be referred to as a computing device.

It should be noted that all functions of the execution device 110 may also be implemented by the local device. For example, the local device 401 implements the functions of the execution device 110 and provides a service for a user of the local device 401, or provides a service for a user of the local device 402.

Usually, a neural network with a shortcut connection has the following problems:
The shortcut connection causes an increase in running memory. The shortcut connection delays releasing memory, which causes an increase in running memory. For example, in some cases, running memory of the ResNet increases by 1/3. This is unfavorable for a device with limited resources, and also means that more memory resources are required to run the ResNet than a corresponding CNN network without a shortcut connection.

The shortcut connection causes an increase in energy consumption. Memory access occupies most energy consumption of a convolution operation. Because the shortcut connection needs to repeatedly read and store input data of a residual module, the shortcut connection causes an increase in energy consumption.

In some scenarios, a residual network may be simulated by adding an identity connection to a weight. During training, a weight of a convolutional layer is divided into two parts: identity mapping I and a to-be-learned weight W. The to-be-learned weight is continuously updated during training. After training is completed, the weight parameter of the convolution layer is obtained by combining the identity mapping and the to-be-learned weight obtained through training. During forward inference, the combined weight parameter of the convolutional layer is used to perform forward inference, to obtain a prediction label. However, it is not extended to a deep network with a bottleneck structure, and is only applicable to a small residual neural network.

In other scenarios, a weight parameter may be added to a shortcut connection, the weight parameter is gradually reduced during training, and the weight parameter is constrained to be 0 when training is completed. In other words, a function of the shortcut connection is gradually reduced during training until the shortcut connection disappears. After training is completed, a neural network without a shortcut connection can be obtained. However, because the shortcut connection of the neural network is eliminated, output accuracy of the neural network is affected, and output precision of the finally obtained neural network is reduced.

Therefore, this application provides a deep learning training method for a computing device. It is ensured that output precision of a finally output trained first neural network is not less than that of an original residual neural network (namely, a second neural network). In addition, this can eliminate a shortcut connection, obtain a neural network without a shortcut connection but with higher output precision, reduce forward inference duration of running a neural network on the computing device, reduce memory space occupied when the neural network is run on a computer, and reduce energy consumption generated when the computing device runs the neural network.

Based on the foregoing descriptions, the following describes in detail the deep learning training method for a computing device provided in this application.

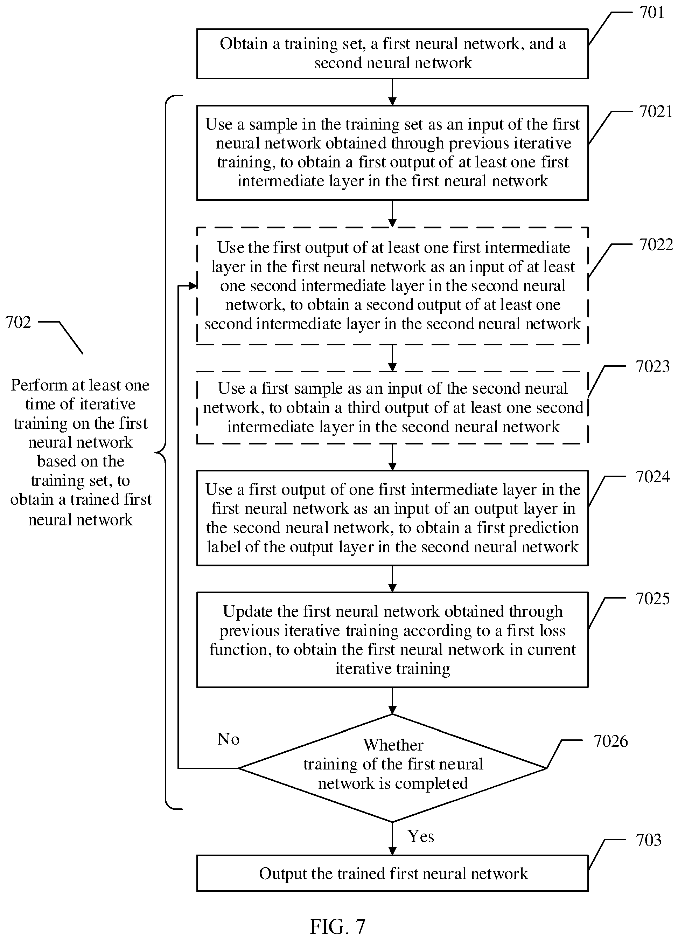

FIG. 7 is a schematic flowchart of a deep learning training method for a computing device according to an embodiment of this application.

701: Obtain a training set, a first neural network, and a second neural network.

The training set includes a plurality of samples, each sample includes a sample feature and a true label, and the sample included in the training set is related to a task that needs to be implemented by the first neural network or the second neural network. The first neural network or the second neural network may be used to implement one or more of image recognition, a classification task, or target detection. For example, the first neural network is used as an example. If the first neural network is used for a classification task, the samples in the training set may include an image and a category corresponding to each image, for example, images including a cat and a dog, and a true label corresponding to the image is a category of a cat or a dog.

The second neural network includes a plurality of network layers, for example, an input layer, an intermediate layer, and an output layer. The output layer may also be referred to as a fully connected layer. Each intermediate layer may include one or more blocks (block). Each block may include a convolution kernel, a pooling operation, a shortcut (shortcut) connection, an activation function, or the like. For example, for a structure of the block, refer to FIG. 4. Details are not described herein again.

A quantity of network layers in the first neural network may be greater than, less than, or equal to a quantity of network layers in the second neural network. A structure of the network layer in the first neural network is similar to a structure of the network layer in the second neural network. A main difference lies in that shortcut connections included in the first neural network are less than shortcut connections included in the second neural network. Alternatively, the first neural network does not include a shortcut connection.

In some scenarios, a quantity of shortcut connections in the first neural network may be determined based on a calculation capability of the computing device that runs the first neural network. Usually, the calculation capability of the computing device may be measured by a memory size or a calculation speed. For example, the memory size is used to measure the calculation capability. The quantity of shortcut connections in the first neural network may be determined based on the memory size of the computing device. The quantity of shortcut connections in the first neural network may be in positive correlation, for example, a linear relationship of positive correlation or an exponential relationship of positive correlation, with the memory size of the computing device. For example, a larger memory space of the computing device indicates a higher upper limit of the quantity of shortcut connections in the first neural network, and a smaller memory space of the computing device indicates a lower upper limit of the quantity of shortcut connections in the first neural network. It is clear that, to reduce the memory space occupied when the first neural network runs, the first neural network may be set to have no shortcut connection.

It should be noted that, for ease of differentiation, an intermediate layer in the first neural network is referred to as a first intermediate layer, and the intermediate layer in the second neural network is referred to as a second intermediate layer. Details are not described in the following.

702: Perform at least one time of iterative training on the first neural network based on the training set, to obtain a trained first neural network.

Iterative training may be performed on the first neural network until a convergence condition is met, and the trained first neural network is output. The convergence condition may include: A quantity of iterations of the first neural network reaches a preset quantity of times, duration of iterative training of the first neural network reaches preset duration, a change of output precision of the first neural network is less than a preset value, or the like.

Specifically, during iterative training, a sample in the training set may be used as an input of the first neural network and the second neural network, and a first output of one or more first intermediate layers in the first neural network for the sample in the training set is used as an input of one or more network layers (for example, a second intermediate layer or a fully connected layer) in the second neural network, to obtain an output result of the second neural network. The first neural network is updated by using the output result of the second neural network as a constraint and based on a first loss function. It may be understood that a constraint term obtained based on the output result of one or more intermediate layers in the second neural network is added to the first loss function. Therefore, an input result of the first neural network tends to be close to the output result of the second neural network, so that shortcut connections of the first neural network are reduced, and output precision of the first neural network is close to or greater than output precision of the second neural network.

For ease of understanding, a process of iterative training of the first neural network may be understood as a process in which the first neural network is used as a student (student) model, the second neural network is used as a teacher (teacher) model, and the teacher model performs knowledge distillation on the student model.

The following uses any iterative training as an example to describe step 702 in detail. Step 702 may specifically include step 7021 to step 7025.

It should be noted that in step 7021 to step 7025 in this application, that is, in a process of performing iterative training on the first neural network, if the following iterative training process is not a process of first iterative training, the mentioned first neural network is a first neural network obtained in a previous iteration. For ease of understanding, the first neural network obtained in a previous iteration is referred to as a first neural network.

7021: Use a sample in the training set as an input of a first neural network obtained through previous iterative training, to obtain the first output of the at least one first intermediate layer in the first neural network.

For example, any sample in the training set is used as a first sample, and the first sample is used as the input of the first neural network and the second neural network, to obtain the first output of one or more first intermediate layers in the first neural network.

For example, a block included in the intermediate layer in the first neural network includes a convolution operation and a pooling operation. An operation such as feature extraction or downsampling is performed on an output of an upper-layer network layer, and the first output of the block is obtained through processing according to an activation function.

7022: Use the first output of the at least one first intermediate layer in the first neural network as an input of at least one second intermediate layer in the second neural network, to obtain a second output of the at least one second intermediate layer in the second neural network.

The first output of one or more first intermediate layers in the first neural network is used as an input of a corresponding second intermediate layer in the second neural network, to obtain the second output of one or more second intermediate layers in the second neural network. For ease of differentiation, an output result of one or more second intermediate layers in the second neural network for the first output of the first intermediate layer is used as the second output in the following.

Usually, first outputs of a plurality of first intermediate layers in the first neural network may be separately input to corresponding second intermediate layers in the second neural network. Then, one second intermediate layer or a last second intermediate layer in the corresponding second intermediate layers outputs the second output output for the first output of each of the plurality of first intermediates, or a last second intermediate layer in the second neural network outputs the second output output for the first output of each of the plurality of first intermediates.

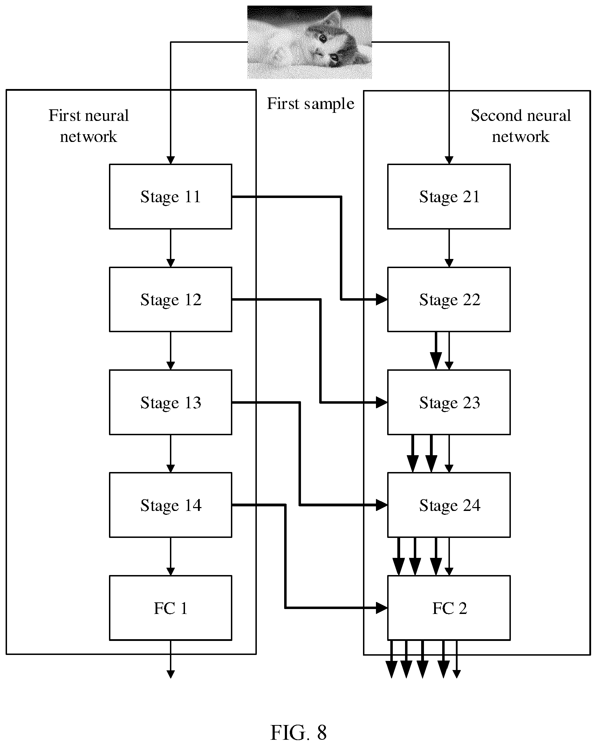

For example, as shown in FIG. 8, one image is selected from the training set as an input, the first neural network includes intermediate layers: a stage 11 to a stage 14, and the second neural network includes intermediate layers: a stage 21 to a stage 24. Each layer may perform feature extraction on input data by using a convolution operation, or perform downsampling by using a pooling operation. A first output of the stage 11 is input to the stage 22, and then processed by the stage 22, the stage 23, and the stage 24. The stage 24 outputs a second output that is output for the first output of the stage 11. A first output of the stage 12 is input to the stage 23, and then processed by the stage 23 and the stage 24. The stage 24 outputs a second output that is output for the first output of the stage 12. A first output of the stage 13 is input to the stage 24, and the stage 24 outputs a second output that is output for the first output of the stage 12. It may be understood that first outputs of the stage 11 to the stage 13 are respectively input to the stage 22 to the stage 24. Finally, the stage 24 outputs second outputs respectively corresponding to the first outputs of the stage 11 to the stage 13. In other words, if a first output of a third first intermediate layer in the first neural network is input to a third second intermediate layer in the second neural network, a last second intermediate layer in the second neural network may output at least three groups of second outputs. Usually, the stage 24 may be the last stage in the second neural network. It is clear that another stage may further be set between the stage 24 and the FC 2. This is merely an example and is not limited herein.

7023: Use the first sample as an input of the second neural network, to obtain a third output of the at least one second intermediate layer in the second neural network.

One or more second intermediate layers in the second neural network output the second output for the input, and also output the third output for the input first sample. For example, as shown in FIG. 8, the first sample is further used as an input of the second neural network. The stage 21 to the stage 24 perform a convolution operation, a pooling operation, or the like on the first sample, and the stage 24 outputs the third output.

It should be noted that step 7022 and step 7023 are optional steps. In other words, the first output of the first intermediate layer in the first neural network may be used as an input of the second intermediate layer in the second neural network, or this step may not be performed.

7024: Use a first output of one first intermediate layer in the first neural network as an input of the output layer in the second neural network, to obtain a first prediction label of the output layer in the second neural network.

The first output of one first intermediate layer in the first neural network may be used as an input of the FC layer in the second neural network, to obtain the prediction label of the FC layer in the second neural network. For ease of differentiation, the prediction label is referred to as the first prediction label.

For example, as shown in FIG. 8, a first output of the stage 14 in the first neural network is used as an input of the FC 2 in the second neural network, to obtain a first prediction label of the FC 2 for the first output of the stage 14. Alternatively, as shown in FIG. 8, a first output of the stage 11 in the first neural network is input to the stage 22 in the second neural network, and is processed by the stage 23, the stage 24, and the FC 2, to obtain a first prediction label for the first output of the stage 11. For example, if the second neural network is used to perform a classification task, and the first sample is an image classified as a cat, the FC 2 may output a probability that the first sample is a cat.

7025: Update, according to the first loss function, the first neural network obtained through previous iterative training, to obtain the first neural network in current iterative training, where the first loss function includes a first constraint term and a second constraint term, the first constraint term includes a loss value corresponding to the first prediction label of the output layer in the second neural network, and the second constraint term includes a loss value between the second output of the at least one second intermediate layer in the second neural network and the corresponding third output.

The first neural network further outputs a prediction label for the first sample. For ease of differentiation, the prediction label output by the first neural network for the first sample is referred to as a third prediction label in the following. Then, the first neural network is updated by using the second output of one or more intermediate layers in the second neural network and the first preset label output by the second neural network as a constraint and the third prediction label, to obtain the first neural network trained in previous iterative training.

Specifically, the first loss function may be used to perform backpropagation update on the first neural network. In other words, gradient update may be performed on a parameter of the first neural network by using a value output by the first loss function. The updated parameter includes a weight parameter, a bias (bias) parameter, or the like of the first neural network. Then, the first neural network in current iterative training is obtained. The first neural network includes the first constraint term and the second constraint term, the first constraint term includes the loss value corresponding to the first prediction label output by the output layer in the second neural network, and the second constraint term includes the loss value between the second output of the at least one second intermediate layer in the second neural network and the corresponding third output.

Optionally, the first constraint term includes a loss value between the first prediction label of the output layer in the second neural network and a true label of the first sample; or the first constraint term includes a loss value between the first prediction label of the output layer in the second neural network and a second prediction label, and the second prediction label is an output result of the second neural network for the first sample.

For example, the first loss function may be expressed as $\mathrm{LOSS}_s = loss_s + \alpha \sum_{i=1}^{n} loss_i + \beta loss_{feat}$.

$loss_s$ is the loss value between the prediction label output by the first neural network and the true label of the input sample.

$loss_i$ indicates a loss value of the first prediction label that is output by an output layer in the teacher model, where a first output of a last intermediate layer in the student model is first input to the output layer in the teacher model. The loss value may be a loss value between the first prediction label output by the teacher model for a feature input by the student model and the second prediction label output by the teacher model for a sample feature of an input sample, or may be a loss value between the first prediction label output by the teacher model for a feature input by the student model and a true label of an input sample, $\alpha \sum_{i=1}^{n} loss_i$ may be understood as the first constrain term.

$loss_{feat}$ indicates a loss value between a second output that is obtained by inputting, to an intermediate layer in the teacher model, a feature output by the intermediate layer in the student model and the third output output by the intermediate layer in the teacher model for the input sample, $loss_{feat} = \sum_{i=1}^{n}(feat\_s\_i - feat\_t)^2$, $feat\_s\_i$ is a feature output by the intermediate layer in the teacher model when the first output of the intermediate layer in the student model is used as an input of the intermediate layer in the teacher model, and $feat\_t$ is the first output, namely, the third output, of the intermediate layer in the teacher model for the input sample feature. $\beta loss_{feat}$ may be understood as the second constrain term.

$\alpha$ and $\beta$ are weight values, and can be fixed values, for example, empirical values, or can be adjusted based on an actual application scenario. For example, a value range of $\alpha$ and $\beta$ may be [0, 1]. For example, $\alpha$ may be 0.6, and $\beta$ may be 0.4. In some scenarios, $\beta$ is usually at least one order of magnitude or even two orders of magnitude less than $\alpha$. For example, the value of $\alpha$ is 0.5, and the value of $\beta$ may be 0.05, 0.005, or the like. In addition, usually, as a quantity of times of training the first neural network increases, values of $\alpha$ and $\beta$ decrease. For example, after 60 times of epoch training is performed on ImageNet, the value of $\alpha$ may decrease from 1 to 0.5. Therefore, in an implementation of this application, during training of the first neural network, constraint strength of the output result of the intermediate layer in the second neural network and the output result of the output layer when the first neural network is updated may be constrained by using the values of $\alpha$ and $\beta$. Therefore, the output result of the intermediate layer in the second neural network and the output result of the output layer can bring more beneficial effect for updating the first neural network. In addition, as a quantity of iterations for training the first neural network increases, impact of the output result of the intermediate layer in the second neural network and the output result of the output layer on updating the first neural network may be gradually reduced. This can reduce a limitation of output precision of the first neural network imposed by output precision of the second neural network, and further improve output precision of the first neural network.

The loss value may be obtained through calculation by using an algorithm such as a mean squared error, a cross entropy, or a mean absolute error.

7026: Determine whether training of the first neural network is completed; and if training of the first neural network is completed, perform step 7026; or if training of the first neural network is not completed, perform step 703.

After iterative training is performed on the first neural network each time, it may be determined whether training of the first neural network is completed, for example, whether a termination condition is met. If training of the first neural network is completed, training of the first neural network may be terminated, and a first neural network obtained through last iterative training is output. If training of the first neural network is not completed, iterative training may continue to be performed on the first neural network.

Specifically, the termination condition may specifically include but is not limited to one or more of the following: Whether a quantity of times of iterative training performed on the first neural network reaches a preset quantity of times, a difference between accuracy of an output result of the first neural network obtained through current iterative training and accuracy of an output result of the first neural network obtained through previous iterative training or a plurality of times of previous iterative training is less than a preset difference, or a difference between accuracy of an output result of a current iteration and accuracy of an output result of the second neural network is less than a preset value.

703: Output the trained first neural network.

After training of the first neural network is completed, the trained first neural network may be output. Shortcut connections included in the trained first neural network are less than shortcut connections included in the second neural network, or the trained first neural network does not include a shortcut connection.

Therefore, in this implementation of this application, the first output of the intermediate layer in the first neural network may be input to the intermediate layer or the fully connected layer in the second neural network, and knowledge distillation of the first neural network is completed based on the output result of the intermediate layer or the fully connected layer in the second neural network. Therefore, the first neural network can achieve high output accuracy without a shortcut connection. In addition, compared with the second neural network, the trained first neural network includes fewer shortcut connections, or the first neural network does not include a shortcut connection. This improves inference efficiency of the first neural network, reduce memory occupied by the first neural network during inference, and reduce power consumption for running the first neural network.

In addition, in some possible scenarios, a trained second neural network may first be obtained, and then, during training of the first neural network, a parameter of the second neural network remains unchanged. For example, a weight parameter or a bias term of the second neural network remains unchanged. For example, before step 702, the second neural network may be trained based on the training set, to obtain a trained second neural network. In step 702, a parameter of the trained second neural network is frozen, that is, the parameter of the second neural network remains unchanged.

In some other possible scenarios, the second neural network may also be trained during iterative training of the first neural network. A ratio of a quantity of times of batch training of the first neural network to a quantity of times of batch training of the second neural network may be 1, or may be adjusted to another value based on an actual application scenario, or the like. For example, in step 702, before step 7021, or after step 7026, the second neural network may be trained based on the first sample, to obtain the trained second neural network.

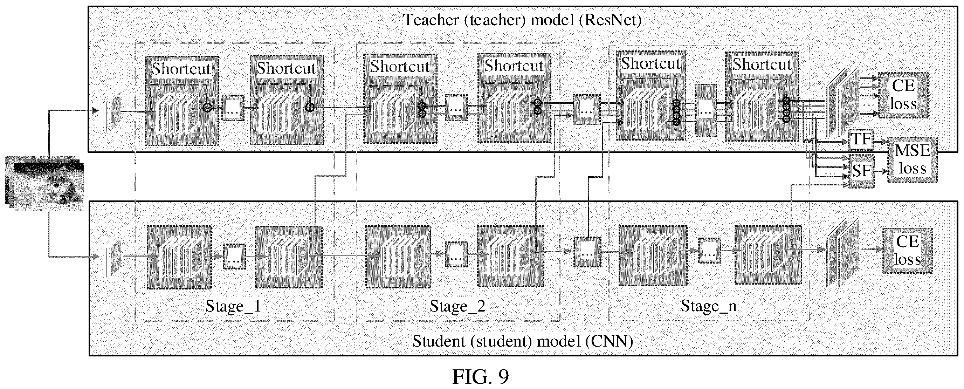

For ease of understanding, for example, a procedure of a deep learning training method for a computing device according to this application is described by using FIG. 9 as an example. The teacher model is ResNet, and the student model is a CNN. Structures of the teacher model and the student model are similar, and both include an input layer, n intermediate layers (namely, stage_1 to stage_n shown in FIG. 9), and a fully connected layer. Each stage includes one or more blocks, and each block may include a convolution operation, a pooling operation, and batch normalization (batch normalization, BN). A difference between the teacher model and the student model lies in that each block of each stage in the teacher model includes a shortcut connection, but each block of each stage in the student model does not include a shortcut connection, or shortcut connections included in the student model are less than shortcut connections included in the teacher model.

In addition, resolution of images processed by corresponding stages of the teacher model and the student model is the same. For example, stage_1 in the teacher model and the student model process images with same resolution, or downsample input images as images with same resolution.

Before iterative update is performed on the student model, a structure of joint fronthaul of the student model and the teacher model is further constructed, for example, determining intermediate layers in the teacher model to which an output of one or more intermediate layers in the student model is input, and determining a first output of which intermediate layer in the student model is input to the fully connected layer in the teacher model.

One or more images are selected from the training set as inputs of the student model and the teacher model, and first outputs of some stages in the student model may be input to stages in the teacher model. For example, a first output of stage_1 in the student model is input to stage_2 in the teacher model. Then, stage_2 in the teacher model outputs a second output for the first output of stage _1 in the student model, and outputs a third output for the first output of stage _1 in the teacher model. The rest can be deduced by analogy. Then, a first output of stage n in the student model is further used as an input of stage_n in the teacher model, to obtain a first prediction label of the teacher model for stage n in the student model. In addition, the teacher model further outputs a second prediction label of the teacher model for an input sample feature.

It may be understood that, during iterative training of the student model, the teacher model performs a forward operation on an input sample, to obtain a first output feat_t of the n stages for the input sample and a second prediction label logits t of the fully connected layer. The student model performs a forward operation on the input sample, to obtain a first output feat i of each stage and a third prediction label logits_s of the fully connected layer. For cross-network feature transmission, the feature feat_i (i = 1, 2, ..., or n) output by the intermediate layer in the student model is transmitted to stage_i+1 in the teacher model, to obtain a feature output feat_s_i of the student network passing through a last phase of the teacher network, and a final output logits_s_i of the fully connected layer. A feature feat_n of the intermediate layer in an $n^{th}$ phase does not pass through the intermediate layer in the teacher model, and is directly input to the fully connected layer in the teacher model.

Then, a value, for example, $loss_s$, of a cross entropy (cross entropy, CE) loss function between the output result of the student model and the true label of the input sample is calculated, a value, for example, $loss_{feat}$, of a mean squared error (mean squared error, MSE) function between the second output and the third output output by the teacher network is calculated, and a loss value, for example, $\sum_{i=1}^{n} loss_i$ , between the first prediction label output by the FC layer in the teacher model for the first output of stage n in the student model and the second prediction label for the input sample feature is calculated. Then, backpropagation is performed on the student model based on $loss_{,,}$ $loss_{feat}$, and $\sum_{i=1}^{n} loss_i$ that are obtained through calculation, a gradient of the student network is calculated, and a parameter is updated.

In addition, if the teacher model is updated during iterative update of the student model, a loss value $loss_t$ between an output logits_t of the fully connected layer in the teacher model and the true label of the input sample may further be calculated, to perform backpropagation on the teacher model based on $loss_t$, and update the parameter of the teacher model. It is clear that, if the teacher model is updated based on the training set before iterative update is performed on the student model, the parameter of the teacher model remains unchanged during update of the student model.

Each time iterative training is performed on the student model, it may be determined whether a quantity of times of iterative training performed on the student model reaches a preset quantity of times, a difference between accuracy of an output result of the student model obtained through current iterative training and accuracy of an output result of the student model obtained through previous iterative training or a plurality of times of previous iterative training is less than a preset difference, or a difference between accuracy of an output result of a current iteration and accuracy of an output result of the teacher model is less than a preset value. After iterative training of the student model is completed, the student model obtained through a last iteration may be output. If iterative training of the student model is not completed, iterative training may continue to be performed on the student model.

Usually, a complex neural network has better performance, but is difficult to be effectively applied to various hardware platforms due to large storage space and calculation resource consumption. Therefore, an increasing depth and size of a neural network (for example, a CNN or a DNN) bring great challenges to deployment of deep learning on a mobile device. Model compression and acceleration of deep learning have become a key research field. In this application, a shortcut connection of a residual neural network is eliminated, to reduce running time of a model, and reduce energy consumption.

For ease of understanding, the following uses an example to describe, in an ImageNet classification data set, accuracy of a first neural network obtained by using a deep learning training method for a computing device provided in this application and accuracy a neural network with a shortcut connection. Refer to Table 1.

**Table 1**

| Network | Accuracy of an output result |
|---|---|
| ResNet50 | 75.62 |
| ResNet50 (without a shortcut connection) | 76.21 |
| ResNet34 | 73.88 |
| ResNet34 (without a shortcut connection) | 74.05 |

ResNet 50 indicates that there are 50 subnetworks, and ResNet 34 indicates that there are 34 subnetworks. ResNet 50 (without a shortcut connection) and ResNet 34 (without a shortcut connection) are first neural networks obtained by using the deep learning training method for a computing device provided in this application, and the first neural network does not include a shortcut connection. Therefore, it can be obviously learned from Table 1 that accuracy of the output result of the neural network without a shortcut connection that is output by using the deep learning training method for a computing device provided in this application is equal to or even greater than accuracy of the output result of the neural network with a shortcut connection. Therefore, the neural network obtained by using the method provided in this application has fewer shortcut connections or does not have a shortcut connection, has an advantage in accuracy of an output result, and the output result has high accuracy. This reduces memory space when the neural network runs, reduces inference duration, and reduces power consumption.

The foregoing describes in detail a procedure of the deep learning training method for a computing device provided in this application. The following describes an apparatus in this application according to the method.

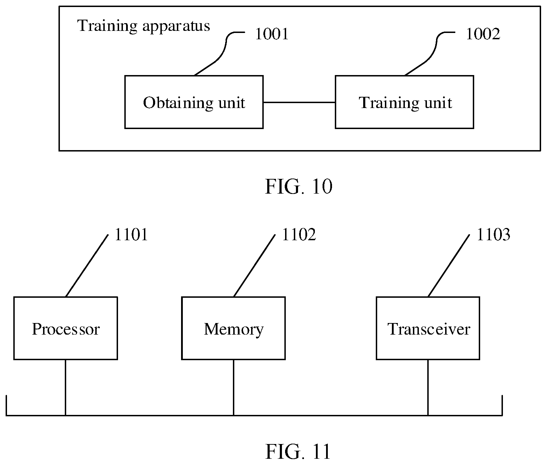

Refer to FIG. 10. This application provides a training apparatus, including:

an obtaining unit 1001, configured to obtain a training set, a first neural network, and a second neural network, where the training set includes a plurality of samples, the first neural network includes one or more first intermediate layers, each first intermediate layer includes one or more blocks without a shortcut connection, the second neural network includes a plurality of network layers, the plurality of network layers include an output layer and one or more second intermediate layers, and each second intermediate layer includes one or more blocks with a shortcut connection; and

a training unit 1002, configured to perform at least one time of iterative training on the first neural network based on the training set, to obtain a trained first neural network, where any one of the at least one time of iterative training includes: using a first output of at least one first intermediate layer in the first neural network as an input of at least one network layer in the second neural network, to obtain an output result of the at least one network layer in the second neural network; and updating the first neural network according to a first loss function, to obtain an updated first neural network, where the first loss function includes a constraint term obtained based on the output result of the at least one network layer in the second neural network.

In a possible implementation, the training unit 1002 is specifically configured to use a first output of one first intermediate layer in the first neural network as an input of a fully connected layer in the second neural network, to obtain a first prediction label of the fully connected layer in the second neural network. The first loss function includes a first constraint term, and the first constraint term includes a loss value corresponding to the first prediction label of the fully connected layer in the second neural network.

In a possible implementation, the training unit 1002 is specifically configured to use a first output of a last intermediate layer in the first neural network as an input of the output layer in the second neural network, to obtain the first prediction label of the output layer in the second neural network.

In a possible implementation, the first constraint term includes a loss value between the first prediction label of the output layer in the second neural network and a true label of a sample output to the first neural network; or the first constraint term includes a loss value between the first prediction label of the output layer in the second neural network and a second prediction label, and the second prediction label is an output result of the second neural network for a sample output to the first neural network.

In a possible implementation, the training unit 1002 is further configured to: obtain the first output of the at least one first intermediate layer in the first neural network; use the first output of the at least one first intermediate layer in the first neural network as an input of at least one second intermediate layer in the second neural network, to obtain a second output of the at least one second intermediate layer in the second neural network; use the sample output to the first neural network as an input of the second neural network, to obtain a third output of the at least one second intermediate layer in the second neural network; and update, according to the first loss function, the first neural network obtained through previous iterative training, to obtain the first neural network in current iterative training, where the first loss function further includes a second constraint term, and the second constraint term includes a loss value between the second output of the at least one second intermediate layer in the second neural network and the corresponding third output.

In a possible implementation, the training unit 1002 is further configured to: obtain the second prediction label of the second neural network for the sample output to the first neural network; calculate a loss value based on the second prediction label and the true label of the sample output to the first neural network; and update a parameter of the second neural network based on the loss value, to obtain the second neural network in current iterative training.

In a possible implementation, the training unit 1002 is further configured to: before performing at least one time of iterative training on the first neural network based on the training set, to obtain the trained first neural network, update the parameter of the second neural network based on the training set, to obtain an updated second neural network.

In a possible implementation, the first neural network is used for at least one of image recognition, a classification task, or target detection.

FIG. 11 is a schematic diagram of a structure of another training apparatus according to this application.

The training apparatus may include a processor 1101 and a memory 1102. The processor 1101 and the memory 1102 are interconnected by using a line. The memory 1102 stores program instructions and data.

The memory 1102 stores the program instructions and the data corresponding to steps corresponding to FIG. 7 to FIG. 9.

The processor 1101 is configured to perform the method steps performed by the training apparatus shown in any one of the foregoing embodiments in FIG. 7 to FIG. 9.

Optionally, the training apparatus may further include a transceiver 1103, configured to receive or send data.

An embodiment of this application further provides a computer-readable storage medium. The computer-readable storage medium stores a program used to generate a vehicle travel speed. When the program is run on a computer, the computer is enabled to perform the steps in the methods described in the embodiments shown in FIG. 7 to FIG. 9.

Optionally, the training apparatus shown in FIG. 11 is a chip.

An embodiment of this application further provides a training apparatus. The training apparatus may also be referred to as a digital processing chip or a chip. The chip includes a processing unit and a communication interface. The processing unit obtains program instructions through the communication interface, and when the program instructions are executed by the processing unit, the processing unit is configured to perform the method steps performed by the training apparatus in any one of the foregoing embodiments in FIG. 7 to FIG. 9.

An embodiment of this application further provides a digital processing chip. A circuit and one or more interfaces that are configured to implement functions of the processor 1101 or the processor 1101 are integrated into the digital processing chip. When a memory is integrated into the digital processing chip, the digital processing chip may complete the method steps in any one or more of the foregoing embodiments. When a memory is not integrated into the digital processing chip, the digital processing chip may be connected to an external memory through a communication interface. The digital processing chip implements, based on program code stored in the external memory, the actions performed by the training apparatus in the foregoing embodiments.

An embodiment of this application further provides a computer program product. When the computer program product is run on a computer, the computer is enabled to perform the steps performed by the training apparatus in the methods described in the embodiments shown in FIG. 7 to FIG. 9.

The training apparatus in this embodiment of this application may be a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that a chip in the server performs the deep learning training method for a computing device described in the embodiments shown in FIG. 7 to FIG. 9. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

Specifically, the processing unit or the processor may be a central processing unit (central processing unit, CPU), a network processor (neural network processing unit, NPU), a graphics processing unit (graphics processing unit, GPU), a digital signal processor (digital signal processor, DSP), an application-specific integrated circuit (application-specific integrated circuit, ASIC), a field programmable gate array (field programmable gate array, FPGA), another programmable logic device, a discrete gate, a transistor logic device, a discrete hardware component, or the like. A general-purpose processor may be a microprocessor or any regular processor or the like.

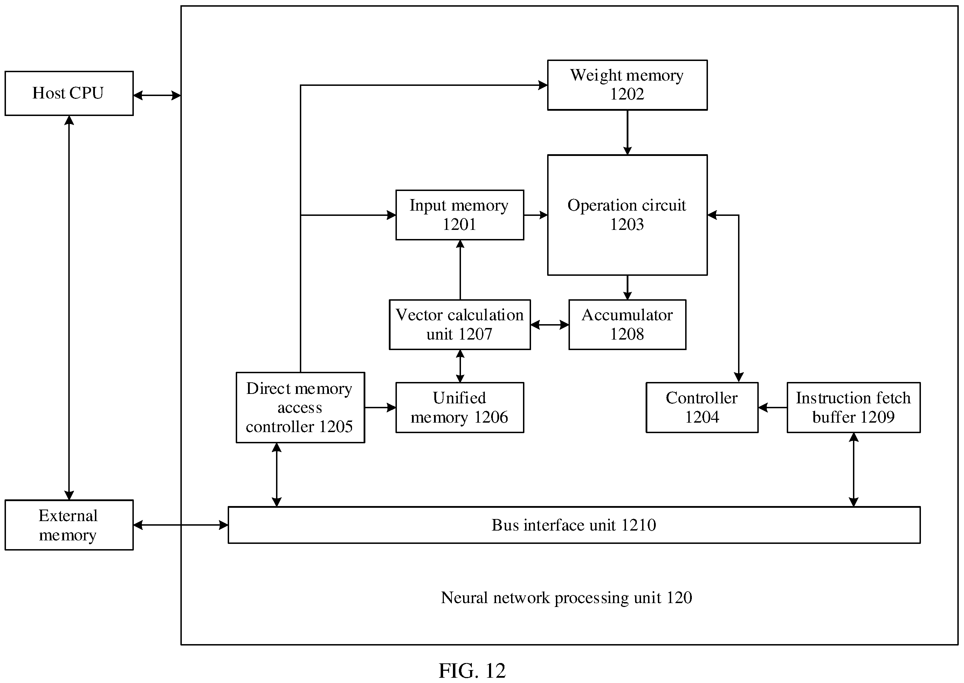

For example, FIG. 12 is a schematic diagram of a structure of a chip according to an embodiment of this application. The chip may be represented as a neural network processing unit NPU 120. The NPU 120 is mounted to a host CPU (Host CPU) as a coprocessor, and the host CPU allocates a task. A core part of the NPU is an operation circuit 1203, and a controller 1204 controls the operation circuit 1203 to extract matrix data in a memory and perform a multiplication operation.

In some implementations, the operation circuit 1203 includes a plurality of processing engines (process engine, PE) inside. In some implementations, the operation circuit 1203 is a two-dimensional systolic array. The operation circuit 1203 may alternatively be a one-dimensional systolic array or another electronic circuit capable of performing mathematical operations such as multiplication and addition. In some implementations, the operation circuit 1203 is a general-purpose matrix processor.

For example, it is assumed that there are an input matrix A, a weight matrix B, and an output matrix C. The operation circuit fetches, from a weight memory 1202, data corresponding to the matrix B, and caches the data on each PE in the operation circuit. The operation circuit fetches data of the matrix A from an input memory 1201, to perform a matrix operation on the matrix B, and stores an obtained partial result or an obtained final result of the matrix in an accumulator (accumulator) 1208.

A unified memory 1206 is configured to store input data and output data. The weight data is directly transferred to the weight memory 1202 by using a direct memory access controller (direct memory access controller, DMAC) 1205.

The input data is also transferred to the unified memory 1206 by using the DMAC.

A bus interface unit (bus interface unit, BIU) 1210 is configured to interact with the DMAC and an instruction fetch buffer (instruction fetch buffer, IFB) 1209 through an AXI bus.

The bus interface unit (bus interface unit, BIU) 1210 is used by the instruction fetch buffer 1209 to obtain instructions from an external memory, and is further used by the direct memory access controller 1205 to obtain original data of the input matrix A or the weight matrix B from the external memory.

The DMAC is mainly configured to transfer input data in the external memory DDR to the unified memory 1206, or transfer the weight data to the weight memory 1202, or transfer the input data to the input memory 1201.

A vector calculation unit 1207 includes a plurality of operation processing units. If required, further processing is performed on an output of the operation circuit, for example, vector multiplication, vector addition, an exponential operation, a logarithmic operation, or size comparison. The vector calculation unit 1107 is mainly configured to perform network calculation at a non-convolutional/fully connected layer in a neural network, for example, batch normalization (batch normalization), pixel-level summation, and upsampling on a feature plane.

In some implementations, the vector calculation unit 1207 can store a processed output vector in a unified memory 1206. For example, the vector calculation unit 1207 may apply a linear function or a non-linear function to the output of the operation circuit 1203, for example, perform linear interpolation on a feature plane extracted at a convolutional layer. For another example, the linear function or the non-linear function is applied to a vector of an accumulated value to generate an activation value. In some implementations, the vector calculation unit 1207 generates a normalized value, a pixel-level summation value, or both. In some implementations, the processed output vector can be used as an activated input to the operation circuit 1203, for example, the processed output vector can be used at a subsequent layer of the neural network.

The instruction fetch buffer (instruction fetch buffer) 1209 connected to the controller 1204 is configured to store instructions used by the controller 1204.

The unified memory 1206, the input memory 1201, the weight memory 1202, and the instruction fetch buffer 1209 are all on-chip memories. The external memory is private for the NPU hardware architecture.

An operation at each layer in the recurrent neural network may be performed by the operation circuit 1203 or the vector calculation unit 1207.

The processor mentioned above may be a general-purpose central processing unit, a microprocessor, an ASIC, or one or more integrated circuits for controlling program execution of the methods in FIG. 7 to FIG. 9.

In addition, it should be noted that the apparatus embodiments described above are merely an example. The units described as separate parts may or may not be physically separate, and parts displayed as units may or may not be physical units, may be located in one position, or may be distributed on a plurality of network units. Some or all the modules may be selected based on an actual requirement to achieve objectives of the solutions of the embodiments. In addition, in the accompanying drawings of the apparatus embodiments provided in this application, connection relationships between modules indicate that the modules have communication connections with each other, which may specifically be implemented as one or more communication buses or signal cables.

Based on the descriptions of the foregoing implementations, a person skilled in the art may clearly understand that this application may be implemented by software in addition to necessary universal hardware, or certainly may be implemented by dedicated hardware, including a dedicated integrated circuit, a dedicated CPU, a dedicated memory, a dedicated component, and the like. Usually, any function implemented by a computer program may be easily implemented by using corresponding hardware. In addition, specific hardware structures used to implement a same function may be various, for example, an analog circuit, a digital circuit, or a dedicated circuit. However, for this application, software program implementation is a better implementation in more cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a read-only memory (read-only memory, ROM), a random access memory (random access memory, RAM), a magnetic disk, or an optical disc of a computer, and includes several instructions for instructing a computer device (which may be a personal computer, a server, or a network device) to perform the methods described in embodiments of this application.

All or some of the embodiments may be implemented by using software, hardware, firmware, or any combination thereof. When the software is used to implement the embodiments, all or some of the embodiments may be implemented in a form of a computer program product.

The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

It should be noted that, in the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances so that embodiments described herein can be implemented in other orders than the order illustrated or described herein. In addition, the terms "include", "contain", and any other variants mean to cover the non-exclusive inclusion, for example, a process, method, system, product, or device that includes a list of steps or units is not necessarily limited to those steps or units, but may include other steps or units not expressly listed or inherent to such a process, method, system, product, or device.

Finally, it should be noted that the foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

1. A deep learning training method for a computing device, comprising:

   obtaining a training set, a first neural network, and a second neural network, wherein the training set comprises a plurality of samples, the first neural network comprises one or more first intermediate layers, each first intermediate layer comprises one or more blocks without a shortcut connection, the second neural network comprises a plurality of network layers, the plurality of network layers comprise an output layer and one or more second intermediate layers, each second intermediate layer comprises one or more blocks with a shortcut connection, and a quantity of shortcut connections comprised in the first neural network is determined based on a memory size of the computing device; and
   performing at least one time of iterative training on the first neural network based on the training set, to obtain a trained first neural network, wherein any one of the at least one time of iterative training comprises: using a first output of at least one first intermediate layer in the first neural network as an input of at least one network layer in the second neural network, to obtain an output result of the at least one network layer in the second neural network; and updating the first neural network according to a first loss function, to obtain an updated first neural network, wherein the first loss function comprises a constraint term obtained based on the output result of the at least one network layer in the second neural network.

2. The method according to claim 1, wherein the using a first output of at least one first intermediate layer in the first neural network as an input of at least one network layer in the second neural network, to obtain an output result of the at least one network layer in the second neural network comprises:

   using a first output of one first intermediate layer in the first neural network as an input of the output layer in the second neural network, to obtain a first prediction label of the output layer in the second neural network, wherein the first loss function comprises a first constraint term, and the first constraint term comprises a loss value corresponding to the first prediction label of the output layer in the second neural network.

3. The method according to claim 2, wherein the using a first output of one first intermediate layer in the first neural network as an input of the output layer in the second neural network comprises:
   using a first output of a last intermediate layer in the first neural network as an input of the output layer in the second neural network, to obtain the first prediction label of the output layer in the second neural network.

4. The method according to claim 2 or 3, wherein

   the first constraint term comprises a loss value between the first prediction label of the output layer in the second neural network and a true label of a sample input to the first neural network; or
   the first constraint term comprises a loss value between the first prediction label of the output layer in the second neural network and a second prediction label, and the second prediction label is an output result of the second neural network for a sample input to the first neural network.

5. The method according to any one of claims 1 to 4, wherein the using a first output of at least one first intermediate layer in the first neural network as an input of at least one network layer in the second neural network, to obtain an output result of the at least one network layer in the second neural network further comprises:

obtaining the first output of the at least one first intermediate layer in the first neural network; and
using the first output of the at least one first intermediate layer in the first neural network as an input of at least one second intermediate layer in the second neural network, to obtain a second output of the at least one second intermediate layer in the second neural network; and
the updating the first neural network according to a first loss function, to obtain an updated first neural network comprises:

using the sample input to the first neural network as an input of the second neural network, to obtain a third output of the at least one second intermediate layer in the second neural network; and
updating, according to the first loss function, the first neural network obtained through previous iterative training, to obtain the first neural network in current iterative training, wherein the first loss function further comprises a second constraint term, and the second constraint term comprises a loss value between the second output of the at least one second intermediate layer in the second neural network and the corresponding third output.

6. The method according to any one of claims 1 to 5, wherein any iterative training further comprises:

obtaining the second prediction label of the second neural network for the sample input to the first neural network;
calculating a loss value based on the second prediction label and the true label of the sample input to the first neural network; and
updating a parameter of the second neural network based on the loss value, to obtain the second neural network in current iterative training.

7. The method according to any one of claims 1 to 5, wherein before the performing at least one time of iterative training on the first neural network based on the training set, to obtain a trained first neural network, the method further comprises:
updating a parameter of the second neural network based on the training set, to obtain an updated second neural network.

8. The method according to any one of claims 1 to 7, wherein the first neural network is used for at least one of image recognition, a classification task, or target detection.

9. A training apparatus, comprising:

an obtaining unit, configured to obtain a training set, a first neural network, and a second neural network, wherein the training set comprises a plurality of samples, the first neural network comprises one or more first intermediate layers, each first intermediate layer comprises one or more blocks without a shortcut connection, the second neural network comprises a plurality of network layers, the plurality of network layers comprise an output layer and one or more second intermediate layers, each second intermediate layer comprises one or more blocks with a shortcut connection, and a quantity of shortcut connections comprised in the first neural network is determined based on a memory size of a computing device running the first neural network; and
a training unit, configured to perform at least one time of iterative training on the first neural network based on the training set, to obtain a trained first neural network, wherein any one of the at least one time of iterative training comprises: using a first output of at least one first intermediate layer in the first neural network as an input of at least one network layer in the second neural network, to obtain an output result of the at least one network layer in the second neural network; and updating the first neural network according to a first loss function, to obtain an updated first neural network, wherein the first loss function comprises a constraint term obtained based on the output result of the at least one network layer in the second neural network.

10. The apparatus according to claim 9, wherein the training unit is specifically configured to:

use a first output of one first intermediate layer in the first neural network as an input of the output layer in the second neural network, to obtain a first prediction label of the output layer in the second neural network, wherein the first loss function comprises a first constraint term, and the first constraint term comprises a loss value corresponding to the first prediction label of the output layer in the second neural network.

11. The apparatus according to claim 10, wherein
the training unit is specifically configured to use a first output of a last intermediate layer in the first neural network as an input of the output layer in the second neural network, to obtain the first prediction label of the output layer in the second neural network.

12. The apparatus according to claim 10 or 11, wherein

the first constraint term comprises a loss value between the first prediction label of the output layer in the second neural network and a true label of a sample input to the first neural network; or
the first constraint term comprises a loss value between the first prediction label of the output layer in the second neural network and a second prediction label, and the second prediction label is an output result of the second neural network for a sample input to the first neural network.

13. The apparatus according to any one of claims 9 to 12, wherein the training unit is further configured to:

obtain the first output of the at least one first intermediate layer in the first neural network;
use the first output of at least one first intermediate layer in the first neural network as an input of at least one second intermediate layer in the second neural network, to obtain a second output of the at least one second intermediate layer in the second neural network;
use the sample input to the first neural network as an input of the second neural network, to obtain a third output of the at least one second intermediate layer in the second neural network; and
update, according to the first loss function, the first neural network obtained through previous iterative training, to obtain the first neural network in current iterative training, wherein the first loss function further comprises a second constraint term, and the second constraint term comprises a loss value between the second output of the at least one second intermediate layer in the second neural network and the corresponding third output.

14. The apparatus according to any one of claims 9 to 13, wherein the training unit is further configured to:

obtain the second prediction label of the second neural network for the sample input to the first neural network;
calculate a loss value based on the second prediction label and the true label of the sample input to the first neural network; and
update a parameter of the second neural network based on the loss value, to obtain the second neural network in current iterative training.

15. The apparatus according to any one of claims 9 to 14, wherein the training unit is further configured to: before performing at least one time of iterative training on the first neural network based on the training set, to obtain the trained first neural network, update the parameter of the second neural network based on the training set, to obtain an updated second neural network.

16. The apparatus according to any one of claims 9 to 15, wherein the first neural network is used for at least one of image recognition, a classification task, or target detection.

17. A training apparatus, comprising a processor, wherein the processor is coupled to a memory, the memory stores a program, and when program instructions stored in the memory are executed by the processor, the method according to any one of claims 1 to 8 is implemented.

18. A computer-readable storage medium, comprising a program, wherein when the program is executed by a processing unit, the method according to any one of claims 1 to 8 is performed.

FIG. 1

Classification result of the
to-be-processed image

Neural
network
layer
230

Output layer 240

Hidden layer n (23n)

Hidden layer 2 (232)

Hidden layer 1 (231)

Convolutional
layer/Pooling
layer
220

226

225

224

223

222

221

Convolutional
neural network
(CNN)
200

Input layer 210

To-be-processed
image

FIG. 2

FIG. 3

x

3x3 conv

F(x)

ReLU

3x3 conv

Shortcut (shortcut) connection

F(x)+x ⊕

ReLU

FIG. 4

System architecture 100

Data collection device 160

Data stream

Database 130

Data stream

Training device 120

Execution device 110

Client device 140

Input data

I/O interface 112

Target model/rule 101

Computing module 111

Data storage system 150

Output a result

Preprocessing module 113

Preprocessing module 114

FIG. 5

400

Data storage system 150

Execution device 110

...

Communication network

Local device 401

Local device 402

For example

FIG. 6

```
┌─────────────────────────────────────────────┐  ┌── 701
│  Obtain a training set, a first neural network, and a │ ╱
│           second neural network              │╱
└─────────────────────────────────────────────┘
                      │
                      ▼
┌─────────────────────────────────────────────┐  ┌── 7021
│  Use a sample in the training set as an input of the first │ ╱
│  neural network obtained through previous iterative │╱
│  training, to obtain a first output of at least one first │
│       intermediate layer in the first neural network │
└─────────────────────────────────────────────┘
                      │
                      ▼
┌ ─ ─ ─ ─ ─ ─ ─ ─ ─ ─ ─ ─ ─ ─ ─ ─ ─ ─ ─ ─ ┐  ┌── 7022
│  Use the first output of at least one first intermediate │ ╱
│  layer in the first neural network as an input of at least │╱
│  one second intermediate layer in the second neural │
│  network, to obtain a second output of at least one │
│  second intermediate layer in the second neural network │
└ ─ ─ ─ ─ ─ ─ ─ ─ ─ ─ ─ ─ ─ ─ ─ ─ ─ ─ ─ ─ ┘
                      │
                      ▼
┌ ─ ─ ─ ─ ─ ─ ─ ─ ─ ─ ─ ─ ─ ─ ─ ─ ─ ─ ─ ─ ┐  ┌── 7023
│  Use a first sample as an input of the second neural │ ╱
│  network, to obtain a third output of at least one second │
│  intermediate layer in the second neural network │
└ ─ ─ ─ ─ ─ ─ ─ ─ ─ ─ ─ ─ ─ ─ ─ ─ ─ ─ ─ ─ ┘
                      │
                      ▼
┌─────────────────────────────────────────────┐  ┌── 7024
│  Use a first output of one first intermediate layer in the │ ╱
│  first neural network as an input of an output layer in │╱
│  the second neural network, to obtain a first prediction │
│  label of the output layer in the second neural network │
└─────────────────────────────────────────────┘
                      │
                      ▼
┌─────────────────────────────────────────────┐  ┌── 7025
│  Update the first neural network obtained through │ ╱
│  previous iterative training according to a first loss │╱
│  function, to obtain the first neural network in current │
│              iterative training             │
└─────────────────────────────────────────────┘
                      │
                      ▼
               ◇─────────────◇
        No    ╱   Whether      ╲    ┌── 7026
     ◄───────  training of the first  ──╱
               ╲  network is completed ╱
                ◇─────────────◇
                      │ Yes
                      ▼
┌─────────────────────────────────────────────┐  ┌── 703
│       Output the trained first neural network │ ╱
└─────────────────────────────────────────────┘
```

702 — Perform at least one time of iterative training on the first neural network based on the training set, to obtain a trained first neural network

FIG. 7

FIG. 8

FIG. 9

Training apparatus

1001

1002

Obtaining unit

Training unit

FIG. 10

1101

1102

1103

Processor

Memory

Transceiver

FIG. 11

```
                                                          ┌──────────────────┐
                                                          │  Weight memory   │
                                             ┌───────────►│      1202         │
                                             │            └────────┬─────────┘
                                             │                     │
                                             │                     ▼
                                             │            ┌──────────────────┐
                              ┌──────────────────┐        │                  │
                              │   Input memory   │───────►│  Operation circuit│◄──┐
                          ┌──►│       1201        │        │       1203       │   │
                          │   └──────────────────┘        └────────┬─────────┘   │
                          │             ▲                           │            │
                          │             │                           ▼            │
                          │   ┌──────────────────┐        ┌──────────────────┐   │
                          │   │ Vector calculation│◄─────►│   Accumulator    │   │
                          │   │    unit 1207      │        │      1208        │   │
                          │   └──────────────────┘        └──────────────────┘   │
                          │             ▲                                         │
          ┌───────────────────┐         │                                        │
          │  Direct memory    │  ┌──────────────────┐      ┌───────────┐  ┌──────────────────┐
          │     access        │─►│    Unified        │      │ Controller│◄─│ Instruction fetch│
          │ controller 1205   │  │  memory 1206      │      │   1204    │  │   buffer 1209    │
          └─────────┬─────────┘  └──────────────────┘      └───────────┘  └────────┬─────────┘
                    ▲                                                               ▲
                    │                                                               │
          ┌─────────────────────────────────────────────────────────────────────────────────┐
          │                         Bus interface unit 1210                                   │
          └─────────────────────────────────────────────────────────────────────────────────┘
```

Host CPU

External memory

Neural network processing unit 120

FIG. 12

<table>
<tr><td colspan="2" align="center">**INTERNATIONAL SEARCH REPORT**</td><td>International application No.<br>**PCT/CN2021/115216**</td></tr>
</table>

**A. CLASSIFICATION OF SUBJECT MATTER**

G06N 3/04(2006.01)i; G06K 9/62(2006.01)i; G06N 3/063(2006.01)i

According to International Patent Classification (IPC) or to both national classification and IPC

**B. FIELDS SEARCHED**

Minimum documentation searched (classification system followed by classification symbols)

G06N G06K

Documentation searched other than minimum documentation to the extent that such documents are included in the fields searched

Electronic data base consulted during the international search (name of data base and, where practicable, search terms used)

CNABS; CNTXT; CNKI; SIPOABS; DWPI; USTXT; WOTXT; EPTXT: 神经网络, 残差, 连接, 单元, 数量, 内存, 缓存, 大小, 网络, 层, 教师, 学生, 蒸馏, 训练, neural network, residual, connection, unit, memory, cache, size, layer, teacher, student, distillation, training

**C. DOCUMENTS CONSIDERED TO BE RELEVANT**

| Category* | Citation of document, with indication, where appropriate, of the relevant passages | Relevant to claim No. |
|---|---|---|
| PX | CN 112183718 A (HUAWEI TECHNOLOGIES CO., LTD.) 05 January 2021 (2021-01-05)<br>claims 1-18, description, paragraphs [0049]-[0226] | 1-18 |
| A | CN 109978003 A (UNIVERSITY OF SHANGHAI FOR SCIENCE AND TECHNOLOGY) 05 July 2019 (2019-07-05)<br>description, paragraphs [0021]-[0050] | 1-18 |
| A | CN 110390660 A (BEIJING LINKING MEDICAL TECHNOLOGY CO., LTD.) 29 October 2019 (2019-10-29)<br>entire document | 1-18 |
| A | CN 110674880 A (BEIJING MEGVII TECHNOLOGY CO., LTD.) 10 January 2020 (2020-01-10)<br>entire document | 1-18 |
| A | US 2019114547 A1 (ILLUMINA, INC.) 18 April 2019 (2019-04-18)<br>entire document | 1-18 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 November 2021** | **18 November 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/115216**

| Patent document cited in search report | | | Publication date (day/month/year) | Patent family member(s) | Publication date (day/month/year) |
|---|---|---|---|---|---|
| CN | 112183718 | A | 05 January 2021 | None | |
| CN | 109978003 | A | 05 July 2019 | None | |
| CN | 110390660 | A | 29 October 2019 | None | |
| CN | 110674880 | A | 10 January 2020 | None | |
| US | 2019114547 | A1 | 18 April 2019 | None | |

Form PCT/ISA/210 (patent family annex) (January 2015)

**REFERENCES CITED IN THE DESCRIPTION**

**Patent documents cited in the description**

- CN 202010899680